(19) Europäisches Patentamt
European Patent Office
Office européen des brevets

(11) EP 4 564 574 A1

(12) EUROPEAN PATENT APPLICATION
published in accordance with Art. 153(4) EPC

(43) Date of publication:
**04.06.2025 Bulletin 2025/23**

(21) Application number: **22967457.7**

(22) Date of filing: **05.12.2022**

(51) International Patent Classification (IPC):
***H01M 50/446*** *(2021.01)* ***H01M 50/409*** *(2021.01)*

(52) Cooperative Patent Classification (CPC):
**H01M 50/409; H01M 50/446**

(86) International application number:
**PCT/CN2022/136435**

(87) International publication number:
**WO 2024/119289 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central, Hong Kong (CN)**

(72) Inventors:
- **WEI, Manxiang**
  **Ningde City, Fujian 352100 (CN)**
- **YANG, Jianrui**
  **Ningde City, Fujian 352100 (CN)**
- **XU, Ming**
  **Ningde City, Fujian 352100 (CN)**
- **XIAO, Zhiwei**
  **Ningde City, Fujian 352100 (CN)**
- **AJIA, Zigu**
  **Ningde City, Fujian 352100 (CN)**

(74) Representative: **Kraus & Lederer PartGmbB**
**Thomas-Wimmer-Ring 15**
**80539 München (DE)**

# (54) SEPARATOR MEMBRANE AND MANUFACTURING METHOD THEREFOR, SECONDARY BATTERY, AND ELECTRICAL APPARATUS

(57) A separator and a preparation method thereof, a secondary battery (5), and an electric apparatus are provided. The separator includes a substrate and a coating. The coating is provided on at least one side of the substrate, where the coating includes primary particles and secondary particles, the primary particles being organic particles and the secondary particles having a pore structure. The separator features good heat resistance and ion transport properties and the like, enabling batteries with the separator to improve their thermal safety performance and cycling performance.

5

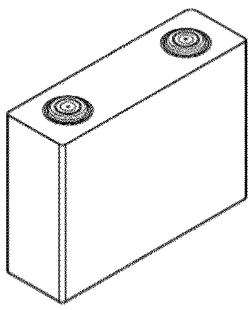

FIG. 1



Processed by Luminess, 75001 PARIS (FR)

## Description

### TECHNICAL FIELD

This application pertains to the field of battery technologies, and specifically relates to a separator and a preparation method thereof, a secondary battery, and an electric apparatus.

### BACKGROUND

In recent years, with the development of battery technologies, batteries, due to their characteristics such as high energy density, good cycling performance, and safety performance, have been widely used in power tools such as electric drills, electric grinders, electric wrenches, electric screwdrivers, electric hammers, impact drills, concrete vibrators, and electric planers, as well as electric vehicles such as electric motorcycles, electric cars, electric vans, light commercial vehicles, electric trucks, electric buses, electric leisure boats, electric commercial short-haul and deep-sea vessels, and electric passenger aircraft.

As batteries are widely used in various fields, the demands for their thermal safety performance and cycling performance have also increased. However, in the related art, as the temperature rises, the thermal safety performance of batteries degrades, and their cycling performance also degrades. Therefore, there is an urgent need to improve the thermal safety performance and cycling performance of batteries.

### SUMMARY

This application is intended to provide a separator and a preparation method thereof, a secondary battery, and an electric apparatus. The separator features properties such as good heat resistance and ion transport properties, enabling batteries with the separator to improve their thermal safety performance and cycling performance.

A first aspect of this application provides a separator including a substrate and a coating, the coating being provided on at least one side of the substrate, where the coating includes primary particles and secondary particles, the primary particles being organic particles and the secondary particles having a pore structure.

In the separator according to this application, the primary particles in the coating are organic particles. The organic particles have good heat resistance, and when the separator shrinks due to heat, the primary particles, the secondary particles, and/or the primary particles and the secondary particles in the coating may come into contact with each other as the substrate shrinks, providing a force opposite to a direction of shrinkage to the substrate. This reduces the shrinkage level of the separator and reduces the risk of short circuit between the positive electrode and negative electrode in the battery, thereby improving the thermal safety performance of the battery. In addition, the secondary particles with a pore structure can store electrolyte and improve the electrolyte absorption rate and electrolyte retention rate of the separator, and their pores can function as ion channels to transport ions, thereby enabling the battery to have both good heat resistance and good cycling performance.

In any embodiment of this application, an average pore size of the secondary particles is 0.1 nm to 10 nm, optionally 0.4 nm to 5 nm.

In any embodiment of this application, a porosity of the secondary particles is 10% to 60%, optionally 30% to 50%.

In any embodiment of this application, an average particle size of the secondary particles is less than or equal to 2 μm, optionally 0.1 μm to 1 μm. The average particle size of the secondary particles being within the foregoing suitable range not only helps the electrolyte to infiltrate the separator to provide the cycling performance of the battery, but also contributes to the overlapping between the particles, so that when the separator is subjected to heat, a force opposite to a heating direction of the separator is quickly provided to reduce the shrinkage level of the separator when heated, thereby improving the thermal safety performance of the battery.

In any embodiment of this application, a specific surface area of the secondary particles is greater than or equal to 100 $m^2/g$, optionally 500 $m^2/g$ to 2000 $m^2/g$. The specific surface area of the secondary particles being set within the foregoing suitable range can increase the contact area between the secondary particles and the electrolyte, thereby helping to improve the electrolyte infiltration and retention effects in the separator.

In any embodiment of this application, based on a weight of the coating, a ratio of a weight proportion A of the primary particles and a weight proportion B of the secondary particles satisfies: $1<A/B\leq 20$.

In any embodiment of this application, based on the weight of the coating, the ratio of the weight proportion A of the primary particles and the weight proportion B of the secondary particles satisfies: $5\leq A/B\leq 15$.

In any embodiment of this application, the weight proportion B of the secondary particles in the coating is less than or equal to 20%, optionally 0.1% to 15%.

In any embodiment of this application, the secondary particles include one or more of inorganic particles and metal-organic framework materials.

In any embodiment of this application, the inorganic particles include one or more of titanium oxides, zirconium oxides, barium oxides, magnesium oxides, barium sulfates, magnesium aluminum silicates, zirconium titanates, and barium titanates.

In any embodiment of this application, the metal-organic framework materials include one or more of IRMOFs, ZIFs, MILs, PCNs, CPLs, and UiOs.

In any embodiment of this application, the secondary particles have a through-hole structure.

In any embodiment of this application, the primary particles include one or more of silicone particles, melamine formaldehyde resin particles, phenolic resin particles, polyester particles, polyimide particles, polyamideimide particles, polyaramide particles, polyphenylene sulfide particles, polysulfone particles, polyethersulfone particles, polyether ether ketone particles, and polyaryl ether ketone particles; and optionally, the primary particles include silicone particles.

In any embodiment of this application, the primary particles include silicone particles, and the silicone particle includes a first polymer, the first polymer including a first structural unit, a second structural unit, and a third structural unit.

The first structural unit has a structure represented by formula (I):

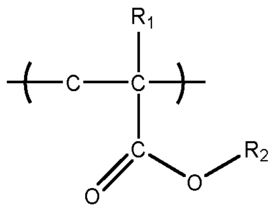
formula (I);

where

in the formula (I), $R_1$ includes one or more of a hydrogen atom or a substituted or unsubstituted C1-C5 alkyl; and optionally, $R_1$ includes one or more of a hydrogen atom or a substituted or unsubstituted C1-C3 alkyl; and

$R_2$ includes one or more of a substituted or unsubstituted C1-C20 alkyl, a substituted or unsubstituted C3-C20 cycloalkyl, and a substituted or unsubstituted C1-C20 hydroxyalkyl; and optionally, $R_2$ includes one or more of a C1-C12 alkyl, a C3-C12 cycloalkyl, and a C1-C12 hydroxyalkyl.

The second structural unit is represented by formula (II):

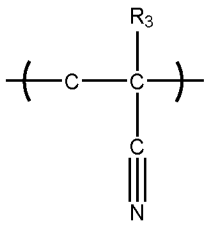
formula (II);

where

in the formula (II), $R_3$ includes one or more of a hydrogen atom or a substituted or unsubstituted C1-C5 alkyl; and optionally, $R_3$ includes one or more of a hydrogen atom or a substituted or unsubstituted C1-C3 alkyl.

The third structural unit is represented by formula (III):

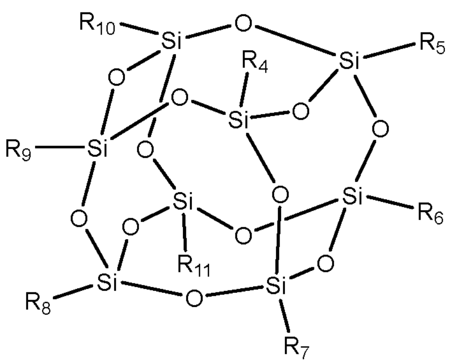
formula (III);

where
in the formula (III), $R_4$ to $R_{11}$ each independently include one or more of a substituted or unsubstituted C1-C10 alkyl or a structural unit represented by formula (III-1), where at least one of $R_4$ to $R_{11}$ is the structural unit represented by formula (III-1),

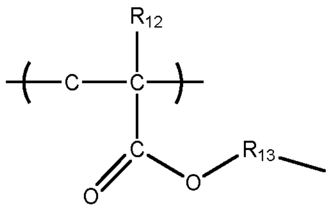
formula (III-1);

where

in the formula (III-1), $R_{12}$ includes one or more of a hydrogen atom or a substituted or unsubstituted C1-C5 alkyl; and optionally, $R_{12}$ includes one or more of a hydrogen atom or a substituted or unsubstituted C1-C3 alkyl; and $R_{13}$ includes a substituted or unsubstituted C1-C10 alkyl; and optionally, $R_{13}$ includes a substituted or unsubstituted C3-C10 alkyl.

In any embodiment of this application, based on a total molar amount of the first structural unit, the second structural unit, and the third structural unit, a molar amount of the first structural unit is denoted as a%, where $70 \leq a \leq 90$, optionally $75 \leq a \leq 85$; and/or, based on the total molar amount of the first structural unit, the second structural unit, and the third structural unit, a molar amount of the second structural unit is denoted as b%, where $0 < b \leq 16$, optionally $5 < b \leq 15$; and/or
based on the total molar amount of the first structural unit, the second structural unit, and the third structural unit, a molar amount of the third structural unit is denoted as c%, where $2 \leq c \leq 15$, optionally $5 \leq c \leq 10$.
In any embodiment of this application, based on the total molar amount of the first structural unit, the second structural unit, and the third structural unit, a molar amount of the first structural unit is denoted as a%, a molar amount of the second structural unit is denoted as b%, and a molar amount of the third structural unit is denoted as c%; and the silicone particles satisfy one or more of condition (1) to condition (3):

$$(1)\ 4 \leq a/b \leq 15;$$

$$(2)\ 5 \leq a/c \leq 14;$$

and

$$(3)\ a:b:c \text{ is } (13\text{–}16):(1\text{–}3):(3\text{–}4).$$

In any embodiment of this application, the primary particles include silicone particles, and the silicone particle includes a second polymer, the second polymer including a structural unit represented by formula (a):

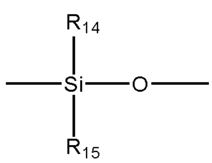
formula (a);

where
in the formula (a), $R_{14}$ and $R_{15}$ each independently include one or more of a substituted or unsubstituted C1-C10 alkyl, hydroxyl, or amino; and optionally, $R_{14}$ and $R_{15}$ each independently include one or more of a substituted or unsubstituted C1-C6 alkyl, hydroxyl, or amino.
In any embodiment of this application, a number average molecular weight of the silicone particles is 35,000 to 70,000, optionally 40,000 to 55,000.

In any embodiment of this application, based on a mass of the silicone particles, a moisture content of the silicone particles is less than or equal to 2500 μg/g, optionally 700 μg/g to 2000 μg/g.

In any embodiment of this application, an average particle size of the silicone particles is less than or equal to 3 μm.

In any embodiment of this application, the average particle size of the silicone particles is 0.01 μm to 2 μm.

In any embodiment of this application, a specific surface area of the silicone particles is greater than or equal to 12.0 $m^2$/ g, optionally 5.0 $m^2$/ g to 10.0 $m^2$/ g.

In any embodiment of this application, a thickness of the substrate is less than or equal to 16 μm, optionally 3 μm to 12 μm.

In any embodiment of this application, a porosity of the substrate is greater than or equal to 25%, optionally 30% to 45%.

In any embodiment of this application, a machine-direction thermal shrinkage rate of the separator at 150°C for 1 h is less than or equal to 2%.

In any embodiment of this application, a transverse-direction thermal shrinkage rate of the separator at 150°C for 1 h is less than or equal to 2%.

In any embodiment of this application, an air permeability of the separator is less than or equal to 230 s/100cc, optionally 160 s/100cc to 200 s/100cc.

In any embodiment of this application, a machine-direction tensile strength of the separator is greater than or equal to 2700 kg/$cm^2$, optionally 3000 kg/$cm^2$ to 4500 kg/$cm^2$.

In any embodiment of this application, a transverse-direction tensile strength of the separator is greater than or equal to 2000 kg/$cm^2$, optionally 2500 kg/$cm^2$ to 4500 kg/$cm^2$.

In any embodiment of this application, an ionic conductivity of the separator is 0.8 S/m to 1.5 S/m.

A second aspect of this application provides a preparation method of the separator according to the first aspect of this application, including the following steps:

providing a substrate;
mixing organic particles as primary particles and secondary particles with a pore structure in a solvent to prepare a coating slurry; and
applying the coating slurry to at least one side of the substrate to form a slurry film layer and forming a coating by drying the slurry film layer, to obtain a separator.

A third aspect of this application provides a battery including the separator according to the first aspect of this application or a separator obtained by the preparation method according to the second aspect of this application.

A fourth aspect of this application provides an electric apparatus including the secondary battery according to the third aspect of this application.

## BRIEF DESCRIPTION OF DRAWINGS

To describe technical solutions in embodiments of this application more clearly, the following briefly describes the accompanying drawings required for describing the embodiments of this application. Apparently, the accompanying drawings in the following descriptions show only some embodiments of this application, and persons of ordinary skill in the art may still derive other drawings from these accompanying drawings without creative efforts.

FIG. 1 is a schematic diagram of an embodiment of a secondary battery in this application.
FIG. 2 is a schematic exploded view of the embodiment of the secondary battery in FIG. 1.
FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack in FIG. 4.
FIG. 6 is a schematic diagram of an embodiment of an electric apparatus including the secondary battery in this application as a power source.

In the accompanying drawings, the figures are not necessarily drawn to scale.

Reference signs:

1. battery pack; 2. upper box body; 3. lower box body; 4. battery module; 5. secondary battery; 51. housing; 52. electrode assembly; and 53. cover plate.

## DESCRIPTION OF EMBODIMENTS

The following specifically discloses in detail embodiments of a separator and a preparation method thereof, a secondary battery, and an electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed sequentially or randomly, and preferably, are performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the terms "first" and "second" are merely intended for a purpose of description, and shall not be understood as an indication or implication of relative importance.

In this application, the term "a plurality of" means two or more than two and the term "a plurality of types" means two types or more than two types.

Unless otherwise specified, the terms used in this application have well known meanings commonly understood by persons skilled in the art.

Unless otherwise specified, numerical values of parameters mentioned in this application may be measured by using various test methods commonly used in the art (for example, they may be measured by using the test methods provided in the embodiments of this application).

Generally, a battery includes an electrode assembly and an electrolyte. The electrode assembly includes a positive electrode plate, a negative electrode plate, and a separator. The separator is disposed between the positive electrode plate and the negative electrode plate, mainly to prevent short circuit between the positive electrode and the negative electrode and allow active lithium ions to freely pass through to form a loop.

As batteries are widely used in various fields, the demands for their thermal safety performance and cycling performance have also increased. The separator is one of crucial components of improving the thermal safety performance and cycling performance of batteries. Currently, the separator used in commercialized batteries is typically made of a polyolefin membrane. The polyolefin membrane has a melting point between 130°C and 160°C and exhibits a significant thermal shrinkage effect when heated. This can not only reduce its electrolyte infiltration effect but also reduce the area through which active substances can pass, which in turn causes active substances to accumulate on the surface of the

separator, resulting in a degradation in the cycling performance of the battery. Dendrites may even form on the surface of the separator and pierce through the separator, causing an internal short circuit due to direct contact between the positive and negative electrodes inside the battery and thereby leading to increased safety risks.

In view of this, this application provides a separator and a preparation method thereof, a secondary battery, and an electric apparatus. The separator features properties such as excellent heat resistance and ion transport properties, enabling batteries with the separator to improve their thermal safety performance and cycling performance.

**Separator**

A first aspect of embodiments of this application provides a separator including a substrate and a coating, the coating being provided on at least one side of the substrate, where the coating includes primary particles and secondary particles, the primary particles being organic particles and the secondary particles having a pore structure.

In the separator according to this application, the primary particles in the coating are organic particles. The organic particles have good heat resistance, and when the separator shrinks due to heat, the primary particles, the secondary particles, and/or the primary particles and the secondary particles in the coating may come into contact with each other as the substrate shrinks, providing a force opposite to a direction of shrinkage to the substrate. This reduces the shrinkage level of the separator and reduces the risk of short circuit between the positive electrode and negative electrode in the battery, thereby improving the thermal safety performance of the battery. In addition, the inventors have found that when only organic particles are used in the coating, if the particles are not packed tightly enough, the thermal shrinkage of the separator is severe; and if particles are packed tightly, heat resistance can be improved, resulting in a low porosity and fewer ion channels in the coating, which is not conducive to the enhancement of the cycling performance of the battery. The inventors have found through extensive research that when the coating contains both primary particles and secondary particles, the foregoing problems can be effectively solved. The inventors speculate that the secondary particles with a pore structure can store electrolyte and improve the electrolyte absorption rate and electrolyte retention rate of the separator, and their pores can function as ion channels to transport ions, thereby enabling the battery to have both good heat resistance and good cycling performance.

In some embodiments of this application, an average pore size of the secondary particles is 0.1 nm to 10 nm, optionally 0.4 nm to 5 nm. The average pore size of the secondary particles being within the foregoing range can contribute to improving the electrolyte infiltration and retention effects in the coating, thereby improving the cycling performance of the battery.

For example, the average pore size of the secondary particles may be but is not limited to 0.4 nm, 0.42 nm, 0.44 nm, 0.46 nm, 0.48 nm, 0.50 nm, 0.52 nm, 0.54 nm, 0.56 nm, 0.58 nm, 0.60 nm, 0.62 nm, 0.64 nm, 0.66 nm, 0.68 nm, 0.70 nm, 0.72 nm, 0.74 nm, 0.76 nm, 0.78 nm, 0.80 nm, 0.82 nm, 0.84 nm, 0.86 nm, 0.88 nm, 0.90 nm, 0.92 nm, 0.94 nm, 0.96 nm, 0.98 nm, 1.0 nm, 1.5 nm, 2.0 nm, 3 nm, 4 nm, 5 nm, 6 nm, 7 nm, 8 nm, 9 nm, 10 nm, or a range defined by any two of the foregoing values, and optionally, the average pore size of the secondary particles may be 0.4 nm to 10 nm, 0.42 nm to 9 nm, 0.50 nm to 8 nm, 0.60 nm to 7 nm, or 1 nm to 6 nm.

Average pore size has a meaning well-known in the art and can be measured using an instrument and method known in the art. For example, the average pore size can be calculated using a BET (Brunauer Emmett Teller) method with reference to the GB/T 21650.2-2008, and testing may be performed using the Tri-Star 3020 specific surface area and pore size analyzer from Micromeritics Company in the USA.

In some embodiments of this application, a porosity of the secondary particles is 10% to 60%, optionally 30% to 50%. The porosity of the secondary particles being within the foregoing range can not only improve the electrolyte infiltration and retention effects in the coating to facilitate the ion transport, thereby improving the cycling performance of the battery, but also enable the secondary particles to have strong mechanical strength.

Material porosity has a meaning well-known in the art and refers to a ratio of the volume of pores inside the particles to the total volume of the particles. It can be measured using an instrument and method known in the art. For example, the porosity can be determined using the AccuPyc II 1340 automated true density tester from Micromeritics Company in the USA with reference to the Chinese standard GB/T 24586-2009 "Iron ores - Determination of apparent density, true density and porosity". Porosity=(V1-V2)/V1*100%, where V1 is the apparent volume of the material, and V2 is the true volume of the material. V1 can be tested using a mercury intrusion method, and V2 can be tested using a nitrogen gas adsorption method.

In some examples, the porosity of the secondary particles may be but is not limited to 10%, 12%, 14%, 16%, 18%, 20%, 22%, 24%, 26%, 28%, 30%, 32%, 34%, 36%, 38%, 40%, 42%, 44%, 46%, 48%, 50%, 52%, 54%, 56%, 58%, 60%, or a range defined by any two of the foregoing values, and optionally, the porosity of the secondary particles may be 10% to 50%, 16% to 40%, 20% to 36%, or 24% to 32%.

In some embodiments of this application, an average particle size of the secondary particles is less than or equal to 2 μm. The average particle size of the secondary particles being within the foregoing suitable range not only helps the electrolyte to infiltrate the separator to provide the cycling performance of the battery, but also contributes to the

overlapping between the particles, so that when the separator is subjected to heat, a force opposite to a heating direction of the separator is quickly provided to reduce the shrinkage level of the separator when heated, thereby improving the thermal safety performance of the battery.

In this application, average particle size has a meaning well-known in the art and can be measured using an instrument and method known in the art. For example, an image can be obtained by measuring a material or separator using a scanning electron microscopy, transmission electron microscopy, or particle size distribution instrument. Multiple (for example, more than 100) test particles (for example, primary particles or secondary particles) are randomly selected from the image, and an average value of the shortest diagonal lengths of the particles is calculated as the average particle size.

In some other embodiments of this application, the average particle size of the secondary particles may be 0.1 μm to 1 μm.

In some examples, the average particle size of the secondary particles may be but is not limited to 0.01 μm, 0.02 μm, 0.03 μm, 0.04 μm, 0.05 μm, 0.06 μm, 0.07 μm, 0.08 μm, 0.09 μm, 0.1 μm, 0.15 μm, 0.2 μm, 0.25 μm, 0.3 μm, 0.35 μm, 0.4 μm, 0.45 μm, 0.5 μm, 0.55 μm, 0.6 μm, 0.65 μm, 0.7 μm, 0.75 μm, 0.80 μm, 0.85 μm, 0.9 μm, 0.95 μm, 1.0 μm, 1.05 μm, 1.1 μm, 1.15 μm, 1.2 μm, 1.25 μm, 1.3 μm, 1.35 μm, 1.4 μm, 1.45 μm, 1.5 μm, 1.55 μm, 1.60 μm, 1.65 μm, 1.7 μm, 1.75 μm, 1.8 μm, 1.85 μm, 1.9 μm, 1.95 μm, 2.0 μm, or a range defined by any two of the foregoing values, and optionally, the average particle size of the secondary particles may be 0.01 μm to 1.8 μm, 0.06 μm to 1.6 μm, 0.1 μm to 1.2 μm, 0.2 μm to 1 μm, or 0.4 μm to 0.8 μm.

In some embodiments of this application, a specific surface area of the secondary particles is greater than or equal to 100 $m^2/g$, optionally 500 $m^2/g$ to 2000 $m^2/g$. The specific surface area of the secondary particles being set within the foregoing suitable range can increase the contact area between the secondary particles and the electrolyte, thereby helping to improve the electrolyte infiltration and retention effects in the separator.

In this application, specific surface area has a meaning well-known in the art and can be measured using an instrument and method known in the art. For example, the specific surface area can be measured using a nitrogen adsorption specific surface area analysis test method with reference to the GB/T 19587-2017 and calculated using a BET (Brunauer Emmett Teller) method. Optionally, the nitrogen adsorption specific surface area analysis test may be performed using the Tri-Star 3020 specific surface area and pore size analyzer from Micromeritics Company in USA.

In some examples, the specific surface area of the secondary particles may be but is not limited to 100 $m^2/g$, 150 $m^2/g$, 200 $m^2/g$, 250 $m^2/g$, 300 $m^2/g$, 350 $m^2/g$, 400 $m^2/g$, 450 $m^2/g$, 500 $m^2/g$, 550 $m^2/g$, 600 $m^2/g$, 650 $m^2/g$, 700 $m^2/g$, 750 $m^2/g$, 800 $m^2/g$, 850 $m^2/g$, 900 $m^2/g$, 950 $m^2/g$, 1000 $m^2/g$, 1050 $m^2/g$, 1100 $m^2/g$, 1150 $m^2/g$, 1200 $m^2/g$, 1250 $m^2/g$, 1300 $m^2/g$, 1350 $m^2/g$, 1400 $m^2/g$, 1450 $m^2/g$, 1500 $m^2/g$, 1550 $m^2/g$, 1600 $m^2/g$, 1650 $m^2/g$, 1700 $m^2/g$, 1750 $m^2/g$, 1800 $m^2/g$, 1850 $m^2/g$, 1900 $m^2/g$, 1950 $m^2/g$, 2000 $m^2/g$, or a range defined by any two of the foregoing values; and optionally, the specific surface area of the secondary particles may be 100 $m^2/g$ to 1900 $m^2/g$, 200 $m^2/g$ to 1600 $m^2/g$, 600 $m^2/g$ to 1000 $m^2/g$, or 700 $m^2/g$ to 900 $m^2/g$.

In the embodiments of this application, a weight proportion of the primary particles and a weight proportion of the secondary particles in the coating satisfy an appropriate relationship. This can not only help to reduce the shrinkage level of the separator to improve the thermal safety performance of the battery, but also enable the primary particles to better overlap each other and enable the secondary particles to be dispersed between adjacent primary particles, forming more voids between the particles to further improve the electrolyte infiltration effect and improve the cycling performance of the battery.

In some embodiments of this application, based on a weight of the coating, a ratio of a weight proportion A of the primary particles and a weight proportion B of the secondary particles satisfies: $1<A/B\leq 20$. In the coating, the weight of the primary particles is larger relative to the weight of the secondary particles. This enables the particles to be tightly packed together, helping to reduce the shrinkage level of the separator to improve the thermal safety performance of the battery. In some other embodiments of this application, based on the weight of the coating, the ratio of the weight proportion A of the primary particles and the weight proportion B of the secondary particles satisfies: $5\leq A/B\leq 15$.

In some examples, the ratio of the weight proportion A of the primary particles and the weight proportion B of the secondary particles may be 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, or a range defined by any two of the foregoing values, optionally, 1 to 19, 5 to 25, 8 to 20, or 10 to 18.

In some embodiments of this application, the weight proportion B of the secondary particles in the coating is less than or equal to 20%, optionally 0.1% to 15%.

In addition, in some embodiments of this application, in addition to the primary particles and the secondary particles, the coating may also include additives such as binders, dispersants, and wetting agents.

In some embodiments of this application, the secondary particles include one or more of inorganic particles and metal-organic framework materials. When used in combination with the primary particles, inorganic particles and metal-organic framework materials (for example, MOF materials) with a pore structure can better improve the electrolyte infiltration and retention effects in the separator.

Optionally, the inorganic particles with a pore structure may include one or more of titanium oxides, zirconium oxides, barium oxides, magnesium oxides, barium sulfates, magnesium aluminum silicates, zirconium titanates, and barium titanates.

Metal-organic frameworks (Metal-Organic Frameworks, MOFs for short) materials are usually referred to as a class of materials that include metal ions and organic ligands.

Optionally, metal-organic frameworks materials may include one or more of IRMOFs (Isoreticular Metal-Organic Frameworks), ZIFs (Zeolitic Imidazolate Frameworks), MILs (Metaria Isofistitute Lavoisier Frameworks), PCNs (Porous Coordination Networks), CPLs (Coordination Pillared-Layers), and UiOs (University of Oslos).

Optionally, the IRMOFs include one or more of IRMOF-1, IRMOF-3, IRMOF-4, IRMOF-8, IRMOF-9, IRMOF-10, IRMOF-11, IRMOF-12, IRMOF-13, IRMOF-14, IRMOF-16, IRMOF-18, IRMOF-61, and IRMOF-62.

Optionally, the ZIFs include one or more of ZIF-1, ZIF-2, ZIF-4, ZIF-5, ZIF-7, ZIF-8, nZIF-8, ZIF-9, ZIF-10, ZIF-11, ZIF-12, ZIF-14, ZIF-20, ZIF-23, ZIF-60, ZIF-61, ZIF-62, ZIF-64, ZIF-65, ZIF-67, ZIF-68, ZIF-69, ZIF-70, ZIF-71, ZIF-72, ZIF-73, ZIF-74, ZIF-75, ZIF-76, ZIF-77, ZIF-78, ZIF-95, ZIF-100, ZIF-268, and ZIF-224.

Optionally, the MILs include one or more of MIL-53 Cr, MIL-100 Cr, MIL-101 Cr, MIL-100 Fe, MIL-177-LT, MIL-177-HT, MIL-45 Co, MIL-45 Fe, MIL-53Al, MIL-53 Sc, MIL-88 Sc, MIL-8, MIL-9, MIL-47, MIL-51, MIL-59, MIL-69, MIL-88, MIL-91, MIL-96, MIL-101, MIL-103, MIL-102, MIL-110, AND MIL-125.

Optionally, the PCNs include one or more of PCN-800, PCN-777, PCN-700, PCN-426, and PCN-333.

Optionally, the CPLs include one or more of CPL-1, CPL-2, CPL-4, CPL-5, CPL-6, and Al-CPL.

Optionally, the UiOs include one or more of UiO-66(Ce), UiO-66(Zr), UiO-66(Hf), UiO-66(Th), UiO-66(Ti), Im-UiO-66, UiO-67, UiO-68, UiO-15, UiO-7, UiO-15, UiO-21, UiO-22, UiO-28, UiO-26, UiO-27, DBP-UiO, and UIO-66-COOH.

In some embodiments of this application, the secondary particles have a through-hole structure. The through-hole structure can shorten the ion transport path and store more electrolyte, thereby helping to improve the cycling performance of the secondary battery.

As described above, the primary particles in the coating have good heat resistance, so that the separator features good heat resistance to reduce its shrinkage level. Therefore, suitable organic particles can further improve the heat resistance of the separator, enabling the battery to have better thermal safety performance.

In some embodiments of this application, the primary particles include one or more of silicone particles, melamine formaldehyde resin particles, phenolic resin particles, polyester particles, polyimide particles, polyamideimide particles, polyaramide particles, polyphenylene sulfide particles, polypropylene particles, polysulfone particles, polyethersulfone particles, polyether ether ketone particles, and polyaryl ether ketone particles.

Optionally, the primary particles include silicone particles. Silicone particles refer to organic siloxanes with a main chain as a silicon-oxygen-silicon bond (-Si-O-Si-). Since the silicon-oxygen-silicon bond is an inorganic bond, the bond energy is large, giving silicone high heat resistance and chemical stability. For example, silicone can be used for a long time below 200°C. Silicone side chains may not be grafted with other groups or may be grafted with an organic group. The organic group grafted can give the silicone good dispersibility, and improve the coating performance of a silicone coating and its affinity with a substrate. The silicone particles dispersed in the coating make the separator have good heat resistance, thus improving the thermal safety performance of the secondary battery. In addition, the silicone particles can form a structure with voids between them, which in turn can improve the electrolyte infiltration and retention properties of the separator, thereby promoting the transport of active ions in the separator, so that the separator can improve the cycling performance of the secondary battery when applied to the secondary battery.

In some embodiments of this application, the primary particles include silicone particles, and the silicone particle includes a first polymer, the first polymer including a first structural unit, a second structural unit, and a third structural unit.

The first structural unit has a structure represented by formula (I):

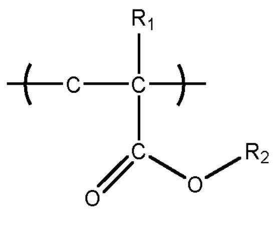

formula (I);

where

in the formula (I), $R_1$ includes one or more of a hydrogen atom or a substituted or unsubstituted C1-C5 alkyl; and optionally, $R_1$ includes one or more of a hydrogen atom or a substituted or unsubstituted C1-C3 alkyl; and
$R_2$ includes one or more of a substituted or unsubstituted C1-C20 alkyl, a substituted or unsubstituted C3-C20

cycloalkyl, and a substituted or unsubstituted C1-C20 hydroxyalkyl; and optionally, $R_2$ includes one or more of a C1-C12 alkyl, a C3-C12 cycloalkyl, and a C1-C12 hydroxyalkyl.

The second structural unit is represented by formula (II):

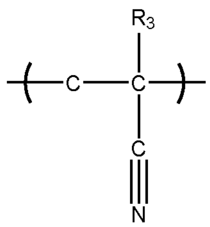

formula (II);

where
in the formula (II), $R_3$ includes one or more of a hydrogen atom or a substituted or unsubstituted C1-C5 alkyl; and optionally, $R_3$ includes one or more of a hydrogen atom or a substituted or unsubstituted C1-C3 alkyl.

The third structural unit is represented by formula (III):

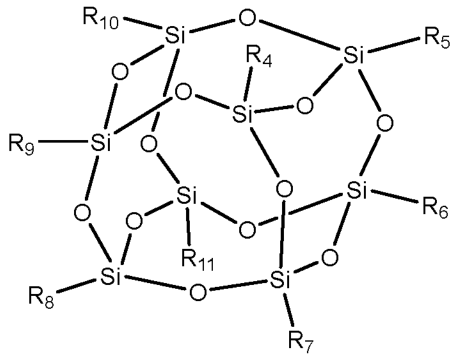

formula (III);

where
in the formula (III), $R_4$ to $R_{11}$ each independently include one or more of a substituted or unsubstituted C1-C10 alkyl or a structural unit represented by formula (III-1), and at least one of $R_4$ to $R_{11}$ is the structural unit represented by formula (III-1),

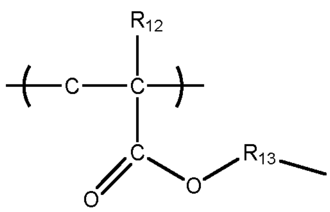

formula (III-1);

where
in the formula (III-1), $R_{12}$ includes one or more of a hydrogen atom or a substituted or unsubstituted C1-C5 alkyl, and optionally, $R_{12}$ includes one or more of a hydrogen atom or a substituted or unsubstituted C1-C3 alkyl; and $R_{13}$ includes a substituted or unsubstituted C1-C10 alkyl, and optionally, $R_{13}$ includes a substituted or unsubstituted C3-C10 alkyl.

The first structural unit can adjust the glass transition temperature of the polymer, improves the toughness and peeling strength of the first polymer, and contributes to good bonding. The second structural unit is capable of producing excellent swelling resistance, meaning that in a case of applying the first polymer to the separator, when the first polymer is in contact with the electrolyte, the first polymer is not prone to swelling and features good swelling resistance. Polysilsesquioxane in the third structural unit can be considered as a material including an organic-inorganic hybridized core-shell structure. Its internal inorganic framework serves as the core, that is, a framework structure composed of Si-O-Si or Si-O bonds. Its shell is composed of organic substituents (C1-C5 alkyl). The organic substituents are wrapped outside the framework structure, and the organic substituents are connected to element Si of the framework structure. The core structure of polysilsesquioxane can give the polymer advantages in heat resistance and mechanical properties. Polysilsesquioxane exhibits poor shrinkage and can ensure the thermal stability of the first polymer during the long-term

charge-discharge cycle of a battery, effectively isolating the positive and negative electrode plates, thereby ensuring the thermal safety performance of the battery. Additionally, due to its small particle size and large surface area, polysilsesquioxane is physically similar to most polymer chains, so that atoms on the surface of polysilsesquioxane are highly reactive. Polymers modified by polysilsesquioxane exhibit properties such as excellent heat resistance, flame retardancy, and oxidation resistance.

In addition, the structural units in the first polymer can exert synergistic effects. Specifically, the first structural unit and the third structural unit can work synergistically to improve the cohesiveness and heat resistance of the first polymer, and the first structural unit and the second structural unit can work synergistically to improve the swelling resistance and the like of the first polymer.

In some embodiments of this application, based on a total molar amount of the first structural unit, the second structural unit, and the third structural unit, a molar amount of the first structural unit is denoted as a%, where $70 \le a \le 90$. With the molar amount of the first structural unit being within the foregoing range, the first polymer can be improved in flexibility, which enables the cohesiveness of the first polymer to be further improved; and when the first polymer is applied to the separator, the bonding force between the first polymer and the substrate of the separator can be improved. Optionally, $75 \le a \le 85$. For example, the molar amount of the first structural unit may be 70%, 75%, 80%, 85%, 90%, or a range defined by any two of the foregoing values.

In some embodiments of this application, based on the total molar amount of the first structural unit, the second structural unit, and the third structural unit, a molar amount of the second structural unit is denoted as b%, where $0 < b \le 16$. With the molar amount of the second structural unit being within the foregoing range, the swelling resistance of the first polymer can be significantly improved. Optionally, $5 \le b \le 15$. For example, the molar amount of the second structural unit may be 5%, 8%, 10%, 12%, 15%, or a range defined by any two of the foregoing values.

In some embodiments of this application, based on the total molar amount of the first structural unit, the second structural unit, and the third structural unit, a molar amount of the third structural unit is denoted as c%, where $2 \le c \le 15$. With the molar amount of the third structural unit being within the foregoing range, the heat resistance of the first polymer can be ensured, and a relatively small proportion of the third structural unit is conducive to increasing the proportions of the first structural unit and the second structural unit and improving the overall cohesiveness and thermal stability of the first polymer. Optionally, $5 \le c \le 10$. For example, the molar amount of the third structural unit may be 5%, 8%, 10%, 12%, 15%, or a range defined by any two of the foregoing values.

In this application, the first structural unit in the first polymer gives the first polymer good cohesiveness. However, when applied to the separator, the first polymer inevitably comes into contact with the electrolyte. The swelling effect of the electrolyte degrades the cohesiveness of the first polymer to some extent, while cyano groups contained in the second structural unit of the first polymer can work synergistically with the first structural unit to improve the swelling resistance and cohesiveness of the first polymer. Especially when $4 \le a/b \le 15$ is further satisfied in this application, the first structural unit can more fully exert a synergistic effect with the second structural unit to improve the cohesiveness and swelling resistance of the first polymer. For example, a/b may be 4, 5, 6, 7, 8, 9, 10, 11, 12, 13, 14, 15, or a range defined by any two of the foregoing values.

In addition, the inorganic structure of polysilsesquioxane contained in the third structural unit of the first polymer can work synergistically with the first structural unit to improve the overall heat resistance and cohesiveness of the first polymer. Especially when $5 \le a/c \le 14$ is further satisfied in this application, the first structural unit can more fully exert a synergistic effect with the third structural unit to improve the cohesiveness and heat resistance of the first polymer. For example, a/c may be 5, 6, 7, 8, 9, 10, 11, 12, 13, 14, or a range defined by any two of the foregoing values.

In some embodiments of the present application, a polymerization degree a of the first structural unit, a polymerization degree b of the second structural unit, and a polymerization degree c of the third structural unit satisfy: a:b:c=(13-16):(1-3):(3-4). When the polymerization degrees of the first structural unit, the second structural unit, and the third structural unit satisfy the foregoing ratio, the three structural units in the silicone particles can synergize with each other on the basis of exerting their respective performances advantages, and the three structural units can work together to improve the cohesiveness, swelling resistance, and heat resistance of the polymer.

The first structural unit includes a variety of chemical structures. Specific chemical structures of the first structural unit are described next.

In some embodiments of this application, $R_1$ is selected from a hydrogen atom and/or a methyl.

In some embodiments of this application, $R_2$ includes one or more of methyl, ethyl, n-propyl, isopropyl, n-butyl, sec-butyl, tert-butyl, n-pentyl, n-octyl, isooctyl, 2-ethylhexyl, dodecyl, or isobornyl.

For example, the first structural unit includes one or more of the structures represented by formula (I-1) to formula (I-8):

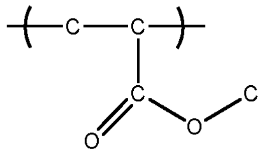 formula (I-1),

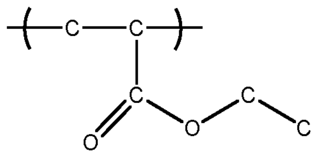 formula (I-2),

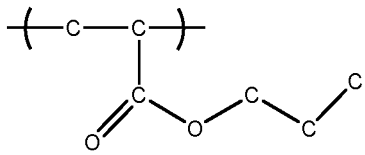 formula (I-3),

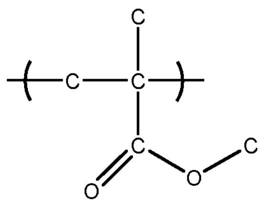 formula (I-4),

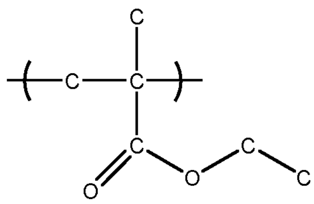 formula (I-5),

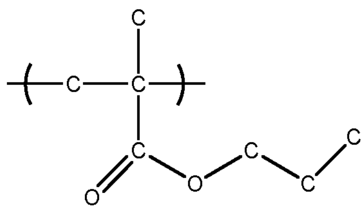 formula (I-6),

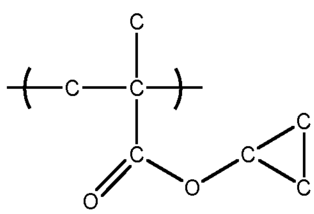 formula (I-7),

and

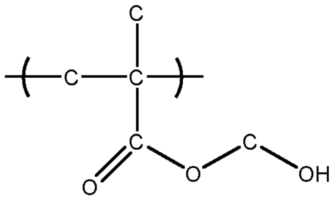
formula (I-8).

The second structural unit includes a variety of chemical structures. Specific chemical structures of the second structural unit are described next.

In some embodiments of this application, $R_3$ is selected from a hydrogen atom or a methyl.

For example, the second structural unit includes one or more of the structures represented by formula (II-1) to formula (II-4):

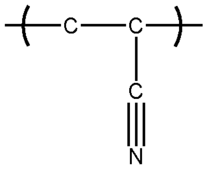
formula (II-1),

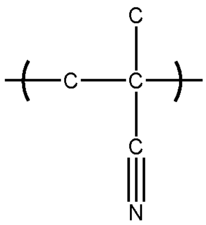
formula (II-2),

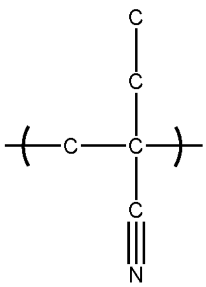
formula (II-3),

and

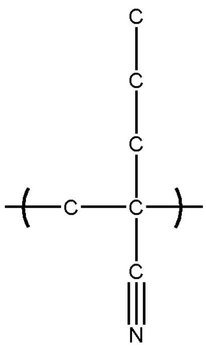
formula (II-4).

The third structural unit includes a variety of chemical structures. Specific chemical structures of the third structural unit are described next.

In some embodiments of this application, $R_4$ to $R_{11}$ are each independently selected from the structural unit

represented by formula (III-1); optionally, $R_{12}$ includes one or more of a hydrogen atom, methyl, ethyl, n-propyl, isopropyl n-butyl, sec-butyl, tert-butyl, or n-pentyl; and/or $R_{13}$ includes one or more of n-propyl, isopropyl, n-butyl, sec-butyl, tert-butyl, n-pentyl, n-octyl, isooctyl, or 2-ethylhexyl.

In some embodiments of this application, one of $R_4$ to $R_{11}$ is selected from the structural unit represented by formula (III-1); optionally, $R_{12}$ includes one or more of a hydrogen atom, methyl, ethyl, n-propyl, isopropyl n-butyl, sec-butyl, tert-butyl, or n-pentyl; and/or $R_{13}$ includes one or more of n-propyl, isopropyl, n-butyl, sec-butyl, tert-butyl, n-pentyl, n-octyl, isooctyl, or 2-ethylhexyl.

In this application, types of groups in the first polymer can be determined using infrared spectroscopy. For example, infrared spectrum of a material can be measured to identify its characteristic peaks, thereby determining types of modified groups. Specifically, an infrared spectrum analysis can be performed on the material by using an instrument and method well-known in the art. For example, an infrared spectrometer (for example, an IS10 Fourier transform infrared spectrometer from Nicolet (nicolet) Company of the USA) is used for the measurement with reference to the GB/T 6040-2019 "General rules for infrared analysis".

In some embodiments of this application, the infrared spectrum of the first polymer has characteristic peaks from 1750 $cm^{-1}$ to 1735 $cm^{-1}$, indicating the presence of ester groups.

In some embodiments of this application, the infrared spectrum of the first polymer has characteristic peaks from 2260 $cm^{-1}$ to 2220 $cm^{-1}$, indicating the presence of cyano groups.

In some embodiments of this application, the infrared spectrum of the first polymer has characteristic peaks from 1100 $m^{-1}$ to 1120 $cm^{-1}$, indicating the presence of a Si-O-Si framework in silsesquioxane.

In some embodiments of this application, the first polymer can be prepared using the following method. The method includes the following steps:

Step S100: Provide a first monomer, a second monomer, and a third monomer; and
Step S200: Mix the first monomer, the second monomer, and the third monomer, and undergo polymerization reactions under the action of an initiator to generate a first polymer.

In this application, the first monomer, the second monomer, and the third monomer are mixed and then copolymerized, and the first polymer formed is a copolymer of the three monomers.

The first monomer has a structure represented by formula (IV),

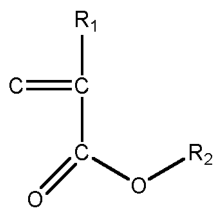
formula (IV);

where

in the formula (IV), $R_1$ includes a hydrogen atom or a substituted or unsubstituted C1-C5 alkyl; and optionally, $R_1$ is selected from one or more of a hydrogen atom or a substituted or unsubstituted C1-C3 alkyl; and
$R_2$ includes a substituted or unsubstituted C1-C20 alkyl, a substituted or unsubstituted C3-C20 cycloalkyl, and a substituted or unsubstituted C1-C20 hydroxyalkyl; and optionally, $R_2$ is selected from one or more of a C1-C12 alkyl, a C3-C12 cycloalkyl, and a C1-C12 hydroxyalkyl.

The first monomer is an acrylate compound, and during its polymerization, the carbon-carbon double bond opens up to form the first structural unit.

For example, the first monomer includes one or more of methyl acrylate, ethyl acrylate, n-propyl acrylate, isopropyl acrylate, n-butyl acrylate, isobutyl acrylate, sec-butyl acrylate, tert-butyl acrylate, n-pentyl acrylate, n-octyl acrylate, isooctyl acrylate, 2-ethylhexyl acrylate, cyclohexyl acrylate, lauryl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

The second monomer has a structure represented by formula (V),

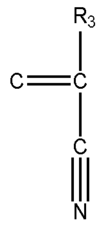

formula (V);

where

in the formula (V), $R_3$ includes one or more of a hydrogen atom or a substituted or unsubstituted C1-C5 alkyl; and optionally, $R_3$ includes one or more of a hydrogen atom or a substituted or unsubstituted C1-C3 alkyl.

The second monomer is an acrylonitrile compound, and during its polymerization, the carbon-carbon double bond opens up to form the second structural unit.

For example, the second monomer includes acrylonitrile and/or methacrylonitrile.

The third monomer has a structure represented by formula (VI),

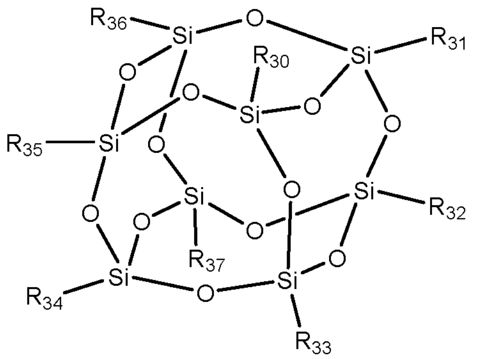

formula (VI);

where

in the formula (VI), $R_{30}$ to $R_{37}$ include one or more independently selected from a substituted or unsubstituted C1-C10 alkyl or a structural unit represented by formula (VI-1), where at least one of $R_{30}$ to $R_{37}$ is the structural unit represented by formula (VI-1),

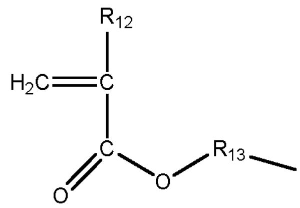

formula (VI-1);

where

in the formula (VI-1), $R_{12}$ includes one or more of a hydrogen atom or a substituted or unsubstituted C1-C5 alkyl; and optionally, $R_{12}$ includes one or more of a hydrogen atom or a substituted or unsubstituted C1-C3 alkyl; and $R_{13}$ includes a substituted or unsubstituted C1-C10 alkyl; and optionally, $R_{13}$ includes a substituted or unsubstituted C3-C10 alkyl.

For example, the third monomer includes one or more of methacryloxypropyl cage polysilsesquioxane, methacryloxypropyl heptaisobutylpolysilsesquioxane, methacryloxypropyl heptaoctylpolysilsesquioxane, acryloxypropyl cage polysilsesquioxane, acryloxypropyl heptaisobutylpolysilsesquioxane, and methacryloxypropyl heptaoctylpolysilsesquioxane.

In some embodiments of this application, step S200 specifically includes the following steps:

Step S210: Add the first monomer, the second monomer, and the third monomer to a solvent and an emulsifier and mix them to form a mixed system.

Step S220: Add an initiator to the mixed system, and undergo polymerization reactions under the action of the initiator to generate a first polymer.

In this application, copolymerization of multiple monomers can be carried out through emulsion polymerization, providing a simpler polymerization method. Certainly, other polymerization means can alternatively be used in this application, such as solution polymerization and suspension polymerization. Process parameters used in a polymerization process can be selected from parameters commonly used in the art, and details are not described herein.

In some embodiments of this application, the emulsifier includes one or more of sodium dodecyl sulfate, sodium dodecyl benzene sulfonate, alkyl diphenyl oxide disulfonate, and ethoxylated alkyl phenol ammonium sulfate.

In some embodiments of this application, based on a total mass of the mixed system, a ratio of a mass percentage of the emulsifier to a mass percentage of the first monomer, second monomer, and third monomer is 0.1% to 5%, which means that an amount of the emulsifier is 0.1% to 5% of a mass of the three monomers. With the mass percentage of the emulsifier being within the foregoing range, the first monomer, second monomer, and third monomer can be emulsified and dispersed in the solvent to form a more homogeneous system.

In some embodiments of this application, the initiator includes potassium persulfate and/or ammonium persulfate.

In some embodiments of this application, based on a total mass of the mixed system, a ratio of a mass percentage of the initiator to the mass percentage of the second monomer, second monomer, and third monomer is 0.15% to 1%, which means that an amount of the initiator is 0.1% to 5% of the mass of the three monomers. With the mass percentage of the initiator being within the foregoing range, adequate polymerization can be ensured.

In some embodiments of this application, the solvent may be water, such as deionized water.

In a specific example, the method includes:

preparation of prepolymer: mixing deionized water, an emulsifier, a first polymerizable monomer, a second polymerizable monomer, and a third polymerizable monomer, and stirring them well to obtain a prepolymer; and

preparation of first polymer: adding the emulsifier and deionized water to a container, and stirring them for 30 minutes to 60 minutes to emulsify to obtain a uniform and stable emulsion; then separately and slowly adding the prepolymer prepared in the previous step and an initiator solution (a solution formed by dissolving the initiator potassium persulfate and/or ammonium persulfate in deionized water) in a dropwise way; and after the dropwise addition is complete, raising the temperature to 90°C-110°C, keeping at that temperature for 0.5 h in reaction, then cooling down to 40°C, and adjusting the pH to 7-8 with ammonia water, followed by filtering, discharging, and a drying process to obtain a polymer.

In some other embodiments of this application, the primary particles include silicone particles, and the silicone particle includes a second polymer, the second polymer including a structural unit represented by formula (a):

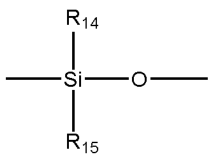

formula (a);

where

in the formula (a), $R_{14}$ and $R_{15}$ include one or more independently selected from a substituted or unsubstituted C1-C10 alkyl, hydroxyl, or amino. Optionally, $R_{14}$ and $R_{15}$ each include one or more independently selected from a substituted or unsubstituted C1-C6 alkyl, hydroxyl, or amino.

In some embodiments of this application, the second polymer includes one or more of polymethylsiloxane, polydimethylsiloxane, polydiethylsiloxane, polymethylhydroxysiloxane, and polymethylaminosiloxane.

For example, the silicone particles include at least one of the structures represented by formula (a-1) to the structure represented by formula (a-5):

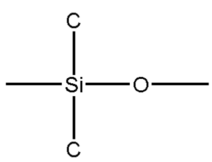

formula (a-1),

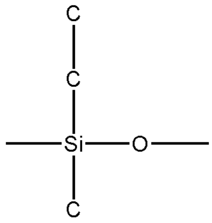
formula (a-2),

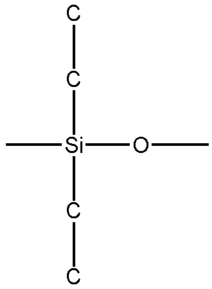
formula (a-3),

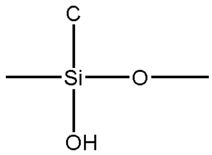
formula (a-4),

and

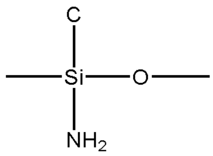
formula (a-5).

The first polymer and the second polymer in this application are only used to distinguish the types of materials and have no limitation on order or quantity.

In some embodiments of this application, a number average molecular weight of the silicone particles is 35,000 to 70,000, optionally 40,000 to 50,000. For example, the number average molecular weight of a polymer may be 35,000, 40,000, 45,000, 50,000, 55,000, 60,000, 65,000, 70,000, or a range defined by any two of the foregoing values. With the number average molecular weight of the silicone particles being within the foregoing range, the silicone particles have a relatively high viscosity, which is conducive to improving the adhesion between the separator and the positive and negative electrode plates when the silicone particles are applied to the separator. The number average molecular weight of the silicone particles being within the foregoing range is conducive to forming silicone particles with a small particle size, and such silicone particles, when applied to the separator, allow for a lightweight and thin coating on the separator to reduce the overall thickness of the separator, thereby facilitating an increase in energy density of the battery. Moreover, the particle size of the silicone particles formed by the polymers is not too small, which can reduce the risk of silicone particles blocking the substrate in the separator and improve the overall air permeability of the separator and the like.

In this application, a number average molecular weight of the first polymer may be measured using a gel permeation chromatogrphy (GPC) method. Specifically, the GPC1515 instrument of Waters Company in the USA is used for testing. A sample is dissolved in tetrahydrofuran for more than 12 hours with a sample concentration of 4 mg/ml, followed by filtering and sampling. The test is performed at a temperature of 25°C and a test flow rate of 1 ml/min.

The inventors have found through research that during long-term charge and discharge cycles of the battery, water in the separator is gradually released and enter into the electrolyte, while the electrolyte has a high sensitivity to water and is prone to producing hydrofluoric acid HF when exposed to water, which increases the acidity of the electrolyte and leads to corrosion of active materials and current collectors, and may result in the leaching of transition metal ions in the active material, thus affecting the electrochemical performance of the battery. Therefore, in this application, the moisture content of the silicone particles is adjusted to be less than or equal to 2500 μg/g, optionally 700 μg/g to 2500 μg/g, based on

a mass of the silicone particles. With the moisture content of the silicone particles being within the foregoing range, the moisture content contained therein is relatively small, which can reduce the risk of side reactions in the electrolyte during the long-term charge and discharge cycles of the battery, thereby improving the electrochemical performance of the battery. For example, the moisture content of the silicone particles may be 700 μg/g, 800 μg/g, 1000 μg/g, 1200 μg/g, 1500 μg/g, 1800 μg/g, 2000 μg/g, 2500 μg/g, or a range defined by any two of the foregoing values.

In this application, the moisture content of the silicone particles can be measured by a moisture meter. The Karl Fischer moisture titration method can be used for moisture content determination, and the Metrohm 831 KF Coulometer, a Swiss-made Karl Fischer moisture titrator, can be used as the testing instrument.

In some embodiments of this application, an average particle size of the silicone particles is less than or equal to 3 μm, optionally 0.01 μm to 2 μm. With a suitable thickness of the coating, the average particle size of the silicone particles is within the above range, which allows the particles to better overlap each other, and thus when the separator is subjected to heat, the extrusion between the particles can effectively reduce the shrinkage level of the separator, further improving the thermal safety performance of the battery.

In some examples, the average particle size of the silicone particles may be but is not limited to 0.01 μm, 0.02 μm, 0.03 μm, 0.04 μm, 0.05 μm, 0.06 μm, 0.07 μm, 0.08 μm, 0.09 μm, 0.1 μm, 0.15 μm, 0.2 μm, 0.25 μm, 0.3 μm, 0.35 μm, 0.4 μm, 0.45 μm, 0.5 μm, 0.55 μm, 0.6 μm, 0.65 μm, 0.7 μm, 0.75 μm, 0.80 μm, 0.85 μm, 0.9 μm, 0.95 μm, 1.0 μm, 1.05 μm, 1.1 μm, 1.15 μm, 1.2 μm, 1.25 μm, 1.3 μm, 1.35 μm, 1.4 μm, 1.45 μm, 1.5 μm, 1.55 μm, 1.60 μm, 1.65 μm, 1.7 μm, 1.75 μm, 1.8 μm, 1.85 μm, 1.9 μm, 1.95 μm, 2.0 μm, 2.05 μm, 2.1 μm, 2.15 μm, 2.2 μm, 2.25 μm, 2.3 μm, 2.35 μm, 2.4 μm, 2.45 μm, 2.5 μm, 2.55 μm, 2.6 μm, 2.65 μm, 2.7 μm, 2.75 μm, 2.8 μm, 2.85 μm, 2.9 μm, 2.95 μm, 3.0 μm, or a range defined by any two of the foregoing values. For example, the average particle size of the silicone particles may be 0.01 μm to 2 μm, 0.05 μm to 1.8 μm, 0.1 μm to 1.5 μm, or 0.3 μm to 1.2 μm.

In some embodiments of this application, a specific surface area of the silicone particles is less than or equal to 12.0 $m^2/g$, optionally 5.0 $m^2/g$ to 10.0 $m^2/g$. The silicone particles with a specific surface within the foregoing range can not only increase the contact area with the electrolyte to improve the electrolyte infiltration and retention effects in the separator, but also facilitate good overlap between the particles, making it easier to form a void structure between the silicone particles to facilitate the migration of active ions.

In any embodiment of this application, a thickness of the substrate is less than or equal to 16 μm. Optionally, the thickness of the substrate is 3 μm to 12 μm. The coating in this application can improve the thermal safety performance and cycling performance of the separator, allowing for the use of a thinner substrate and thereby helping to further increase the energy density of the battery.

In some embodiments of this application, the substrate has a porous structure, and a porosity of the substrate is greater than or equal to 25%. Optionally, the porosity of the substrate is 30% to 45%. The porous substrate with a porosity being within the foregoing suitable range is conducive to further improving the ion transport property of the separator to improve the cycling performance of the battery.

There is no particular limitation on the material of the substrate in this application, and any commonly known substrates with good chemical stability and mechanical stability can be selected. For example, the substrate may include at least one of a porous polyolefin-based resin film (for example, at least one of polyethylene, polypropylene, and polyvinylidene fluoride), a porous glass fiber, and a porous nonwoven fabric. The porous substrate may be a single-layer film or a multilayer composite film. When the porous substrate is a multilayer composite film, each layer may be made of a same material or different materials.

In some embodiments of this application, a machine-direction thermal shrinkage rate of the separator at 150°C for 1 h is less than or equal to 2%.

In some embodiments of this application, a transverse-direction thermal shrinkage rate of the separator at 150°C for 1 h is less than or equal to 2%.

In the foregoing embodiments, the separator of this application has a low thermal shrinkage rate in both the transverse and machine directions, thereby further improving the thermal safety performance of the battery.

In some embodiments of this application, an air permeability of the separator is less than or equal to 230 s/100cc. Optionally, the air permeability of the separator is 160 s/100cc to 200 s/100cc. The separator of this application features good air permeability, thereby improving ion transport properties and reducing the resistance of the battery to improve the cycling performance of the battery.

In some embodiments of this application, a machine-direction tensile strength of the separator is greater than or equal to 2700 $kg/cm^2$, optionally 3000 $kg/cm^2$ to 4500 $kg/cm^2$.

In some embodiments of this application, a transverse-direction tensile strength of the separator is greater than or equal to 2000 $kg/cm^2$, optionally 2500 $kg/cm^2$ to 4500 $kg/cm^2$.

In some embodiments of this application, a wetted length of the separator is greater than or equal to 65 mm, optionally 70 mm to 100 mm. The separator of this application features good electrolyte infiltration properties, thereby improving ion transport properties and battery capacity.

In this application, wetted length of the separator has a meaning well-known in the art and can be measured using

a method known in the art. An exemplary test method is as follows: cutting a separator into samples with a width of 5 mm and a length of 100 mm, fixing both ends of a sample, and placing the sample horizontally; and taking 0.5 mg of electrolyte, dropping it in the center of the sample, taking a picture after a specified time (1 min in this application) is reached, and measuring a length of the electrolyte diffusion, thereby obtaining a wetted length of the separator. To ensure the accuracy of the test results, multiple (for example, 5 to 10) samples can be tested, and the test results can be obtained by calculating the average value. The electrolyte can be prepared according to the following method: mixing ethylene carbonate (EC), ethyl methyl carbonate (EMC), and diethyl carbonate (DEC) at a mass ratio of 30:50:20 to obtain an organic solvent, and dissolving fully dried LiPF6 in the organic solvent to prepare an electrolyte with a concentration of 1 mol/L.

In the foregoing embodiments, the separator of this application has high tensile strength in both the transverse and machine directions, so that the probability of separator breakage during battery swelling is low, thereby further improving the safety performance of the battery.

In this application, the thermal shrinkage rate, tensile strength, and air permeability of the separator all have a meaning well-known in the art and can be measured using methods known in the art. For example, all of them may be measured with reference to GB/T 36363-2018.

In some embodiments of this application, an ionic conductivity of the separator is 0.8 S/m to 1.5 S/m. The separator with an ionic conductivity within the foregoing range can help to improve the cycling performance of the battery.

The ionic conductivity of the separator can be measured through alternating current impedance spectroscopy experiments. Specifically, the separator is cut into circular pieces of a certain area, dried, placed between two stainless steel electrodes, and sealed to form a button battery after absorbing a sufficient amount of electrolyte. Then the battery is subjected to alternating current impedance spectroscopy experiments. The intersection of the linear portion of the obtained impedance spectrum with the real axis represents the bulk resistance of the electrolyte. Therefore, the ionic conductivity of the separator can be calculated according to the formula $\sigma=(L/A)\times R$. L represents the thickness of the separator (cm), A represents the contact area between the stainless steel electrodes and the separator ($cm^2$), and R represents the bulk resistance of the electrolyte (mS).

The electrolyte used can be prepared according to the following method: mixing ethylene carbonate (EC), ethyl methyl carbonate (EMC), and diethyl carbonate (DEC) at a mass ratio of 30:50:20 to obtain an organic solvent, and dissolving fully dried LiPF6 in the organic solvent to prepare an electrolyte with a concentration of 1 mol/L.

It should be noted that the foregoing parameters of the coating of the separator are all parameters for a coating on a single side of the substrate.

When the coating is provided on two sides of the substrate, parameters for the coating on either side that satisfy this application are considered to fall within the protection scope of this application.

**Preparation method of separator**

A second aspect of this application provides a preparation method of the separator according to the first aspect of this application, including the following steps: S1. providing a substrate; S2. mixing organic particles as primary particles and secondary particles with a pore structure in a solvent to prepare a coating slurry; and S3. applying the coating slurry to at least one side of the substrate to form a slurry film layer and forming a coating by drying the slurry film layer, to obtain a separator.

In some embodiments of this application, in S2, the solvent may be water, such as deionized water. The binder may be a water-soluble binder with advantages of good thermodynamic stability and environmental friendliness, which is conducive to the preparation and application of the coating slurry. In an example, the water-soluble binder may include at least one of aqueous acrylic resins (for example, acrylic acid, methacrylic acid, sodium acrylate monomer homopolymers, or copolymers with other comonomers), polyvinyl alcohol (PVA), isobutylene maleic anhydride copolymer, and polyacrylamide. In addition, the coating slurry may also include other components, such as dispersants and wetting agents.

In some embodiments of this application, in S3, the coating is performed using a coater. In this application, a model of the coater is not specially limited. For example, a commercially available coater can be used. Optionally, the coater includes a gravure roller, and the gravure roller is used for transferring the coating slurry to the substrate. Optionally, the number of lines of the gravure roller is 180 LPI to 250 LPI, more optionally 190 LPI to 140 LPI. In addition, the coating method can be transfer coating, rotary spraying, dip coating, or the like.

Controlling the foregoing process parameters within the given ranges can further improve the performance of the separator of this application. Those skilled in the art can selectively adjust one or more of the foregoing process parameters according to actual production.

In the preparation method of separator of this application, the coating is produced through one-step coating, which greatly simplifies the production process of the separator.

For some raw materials and their percentages and other parameters used in the preparation method of separator of this application, reference can be made to the separator according to the first aspect of embodiments of this application, and details are not repeated herein. Unless otherwise specified, raw materials used in the preparation method of separator

of this application are all commercially available.

## Secondary battery

A third aspect of embodiments of this application provides a secondary battery. The secondary battery, also referred to as a rechargeable battery or a storage battery, is a battery that is reusable through activation of an active material in the battery by charging the battery that has been discharged. Generally, the secondary battery includes an electrode assembly and an electrolyte. The electrode assembly includes a positive electrode plate, a negative electrode plate, and a separator. The separator is disposed between the positive electrode plate and the negative electrode plate, mainly to prevent short circuit between the positive electrode and the negative electrode and allow active lithium ions to pass through.

The secondary battery is not particularly limited in type in this application. For example, the secondary battery may be a lithium-ion battery, a sodium-ion battery, or the like. In particular, the secondary battery may be a lithium-ion secondary battery.

The secondary battery of this application includes the separator according to the first aspect of this application or a separator obtained using the preparation method according to the second aspect of this application. The separator is sandwiched between a positive electrode plate and a negative electrode plate. Optionally, at least a side of the separator close to the negative electrode plate is provided with the coating of this application. Therefore, the secondary battery of this application features good thermal safety performance and cycling performance.

[Positive electrode plate]

In some embodiments of this application, a positive electrode plate includes a positive electrode current collector and a positive electrode film layer disposed on at least one side of the positive electrode current collector and including a positive electrode active material. For example, the positive electrode current collector has two opposite sides in its thickness direction, and the positive electrode film layer is provided on either or both of two opposite surfaces of the positive electrode current collector.

When the secondary battery of this application is a lithium-ion secondary battery, the positive electrode active material may include but is not limited to at least one of lithium-containing transition metal oxides, lithium-containing phosphates, and their respective modified compounds. Examples of the lithium transition metal oxides may include but are not limited to at least one of lithium cobalt oxides, lithium nickel oxides, lithium manganese oxides, lithium nickel cobalt oxides, lithium manganese cobalt oxides, lithium nickel manganese oxides, lithium nickel cobalt manganese oxides, lithium nickel cobalt aluminum oxides, and their respective modified compounds. Examples of the lithium-containing phosphates may include but are not limited to at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds.

In some embodiments of this application, to further increase the energy density of the secondary battery, the positive electrode active material for the lithium-ion secondary battery may include at least one of lithium transition metal oxides with a general formula $Li_aNi_bCo_cM_dO_eA_f$ and their modified compounds, where $0.8 \le a \le 1.2$, $0.5 \le b < 1$, $0 < c < 1$, $0 < d < 1$, $1 \le e \le 2$, $0 \le f \le 1$, M is selected from at least one of Mn, Al, Zr, Zn, Cu, Cr, Mg, Fe, V, Ti, and B, and A is selected from at least one of N, F, S, and Cl.

In an example, the positive electrode active material for the lithium-ion secondary battery may include at least one of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$, and $LiMnPO_4$.

When the secondary battery of this application is a sodium-ion secondary battery, the positive electrode active material may include but is not limited to at least one of sodium-containing transition metal oxides, polyanionic materials (such as phosphate, fluorophosphate, pyrophosphate, and sulfate), and Prussian blue materials.

In an example, the positive electrode active material for the sodium-ion secondary battery may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, Prussian blue materials, and materials with a general formula $X_pM'_q(PO_4)_rO_xY_{3-x}$. In the general formula $X_pM'_q(PO_4)_rO_xY_{3-x}$, $0 < p \le 4$; $0 < q \le 2$; $1 \le r \le 3$; $0 \le x \le 2$; X is selected from at least one of $H^+$, $Li^+$, $Na^+$, $K^+$, and $NH_4^+$; M' is a transition metal cation, optionally at least one of V, Ti, Mn, Fe, Co, Ni, Cu, and Zn; and Y is a halogen anion, optionally at least one of F, Cl and Br.

In this application, the modified compounds of the foregoing positive electrode active materials may be obtained by doping modification and/or surface coating modification to the positive electrode active material.

In some embodiments of this application, the positive electrode film layer further optionally includes a positive electrode conductive agent. The positive electrode conductive agent is not particularly limited in type in this application. For

example, the positive electrode conductive agent includes at least one of superconducting carbon, conductive graphite, acetylene black, carbon black, Ketjen black, carbon dots, carbon nanotubes, graphene, and carbon nanofiber. In some embodiments of this application, based on a total weight of the positive electrode film layer, a mass percentage of the positive electrode conductive agent is ≤6wt%.

In some embodiments of this application, the positive electrode film layer further optionally includes a positive electrode binder. The positive electrode binder is not particularly limited in type in this application. In an example, the positive electrode binder may include at least one of polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, tetrafluoroethylene-hexafluoropropylene copolymers, and fluorine-containing acrylic resins. In some embodiments of this application, based on a total weight of the positive electrode film layer, a mass percentage of the positive electrode binder is ≤5wt%.

In some embodiments of this application, the positive electrode current collector may be a metal foil current collector or a composite current collector. As an example of the metal foil, aluminum foil may be used. The composite current collector may include a polymer material substrate and a metal material layer formed on at least one side of the polymer material substrate. In an example, the metal material may include at least one of aluminum, aluminum alloys, nickel, nickel alloys, titanium, titanium alloys, silver, and silver alloys. In an example, the polymer material substrate may include at least one of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

[Negative electrode plate]

In some embodiments of this application, a negative electrode plate includes a negative electrode current collector and a negative electrode film layer disposed on at least one side of the negative electrode current collector and including a negative electrode active material. For example, the negative electrode current collector has two opposite sides in its thickness direction, and the negative electrode film layer is provided on either or both of two opposite surfaces of the negative electrode current collector.

The negative electrode active material may be a negative electrode active material well-known in the art and used for secondary batteries. In an example, the negative electrode active material includes but is not limited to at least one of natural graphite, artificial graphite, soft carbon, hard carbon, silicon-based materials, tin-based materials, and lithium titanates. The silicon-based material may include at least one of elemental silicon, silicon-oxygen compounds, silicon-carbon composites, silicon-nitrogen composites, and silicon alloys. The tin-based materials may include at least one of elemental tin, tin oxides, and tin alloy materials.

In some embodiments of this application, the negative electrode film layer further optionally includes a negative electrode conductive agent. The negative electrode conductive agent is not particularly limited in type in this application. For example, the negative electrode conductive agent may include at least one of superconducting carbon, conductive graphite, acetylene black, carbon black, Ketjen black, carbon dots, carbon nanotubes, graphene, and carbon nanofiber. In some embodiments of this application, based on a total weight of the negative electrode film layer, a mass percentage of the negative electrode conductive agent is ≤7wt%.

In some embodiments of this application, the negative electrode film layer further optionally includes a negative electrode binder. The negative electrode binder is not particularly limited in type in this application. In an example, the negative electrode binder may include at least one styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS). In some embodiments of this application, based on a total weight of the negative electrode film layer, a mass percentage of the negative electrode binder is ≤6wt%.

In some embodiments of this application, the negative electrode film layer further optionally includes another adjuvant. For example, the another adjuvant may include a thickener, for example, sodium carboxymethyl cellulose (CMC) or a PTC thermistor material. In some embodiments of this application, based on a total weight of the negative electrode film layer, a mass percentage of the another adjuvant is ≤3wt%.

In some embodiments of this application, the negative electrode current collector may be a metal foil current collector or a composite current collector. As an example of the metal foil, copper foil may be used. The composite current collector may include a polymer material substrate and a metal material layer formed on at least one side of the polymer material substrate. In an example, the metal material may include at least one of copper, copper alloys, nickel, nickel alloys,

titanium, titanium alloys, silver, and silver alloys. In an example, the polymer material substrate may include at least one of polypropylene (PP), polyethylene terephthalate (PET), polybutylene terephthalate (PBT), polystyrene (PS), and polyethylene (PE).

The negative electrode film layer is usually formed by applying a negative electrode slurry onto the negative electrode current collector, followed by drying and cold-pressing. The negative electrode slurry is usually formed by dispersing the negative electrode active material, the optional conductive agent, the optional binder, and the optional another adjuvant in a solvent and stirring them evenly. The solvent may be but is not limited to N-methylpyrrolidone (NMP) or deionized water.

The negative electrode plate does not exclude additional functional layers other than the negative electrode film layer. For example, in some embodiments, the negative electrode plate of this application further includes a conductive primer layer (which is, for example, formed by a conductive agent and a binder) sandwiched between the negative electrode current collector and the negative electrode film layer and disposed on the surface of the negative electrode current collector. In some other embodiments, the negative electrode plate of this application further includes a protection layer covering the surface of the negative electrode film layer.

[Electrolyte]

During charge and discharge of the secondary battery, active ions are intercalated and deintercalated between the positive electrode plate and the negative electrode plate. The electrolyte plays a role of conducting active ions between the positive electrode plate and the negative electrode plate. The electrolyte is not particularly limited in type in this application and may be selected according to actual needs.

The electrolyte includes an electrolytic salt and a solvent. The electrolytic salt and solvent are not specifically limited in type and may be selected according to actual needs.

When the secondary battery of this application is a lithium-ion secondary battery, in an example, the electrolytic salt may include but is not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro(dioxalato)phosphate (LiDFOP), and lithium tetrafluoro oxalato phosphate (LiTFOP).

When the secondary battery of this application is a sodium-ion secondary battery, in an example, the electrolytic salt may include but is not limited to at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bisfluorosulfonyl imide (NaFSI), bistrifluoromethanesulfonyl sodium imide (NaTFSI), sodium trifluoromethanesulfonate (NaTFS), sodium difluoroborate (NaDFOB), sodium bis(oxalato)borate (NaBOB), sodium difluorophosphate ($NaPO_2F_2$), sodium difluorodioxalophosphate (NaDFOP), and sodium tetrafluoroxalate phosphate (NaTFOP).

In an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments of this application, the electrolyte further optionally includes an additive. For example, the additive may include a negative electrode film-forming additive, or may include a positive electrode film-forming additive, or may include an additive capable of improving some performance of the secondary battery, for example, an additive for improving overcharge performance of the secondary battery, an additive for improving high-temperature performance of the secondary battery, or an additive for improving low-temperature performance of the secondary battery.

In some embodiments of this application, the positive electrode plate, the separator, and the negative electrode plate may be made into an electrode assembly through winding and/or lamination.

In some embodiments of this application, the secondary battery may further include an outer package. The outer package may be used for packaging the electrode assembly and the electrolyte.

In some embodiments of this application, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, for example, at least one of polypropylene (PP), polybutylene terephthalate (PBT), and polybutylene succinate (PBS).

The secondary battery is not particularly limited in shape in this application and may be cylindrical, rectangular, or any other shape. FIG. 1 shows a secondary battery 5 of a rectangular structure as an example.

In some embodiments of this application, as shown in FIG. 2, the outer package may include a housing 51 and a cover plate 53. The housing 51 may include a base plate and a side plate connected onto the base plate, and the base plate

and the side plate are enclosed to form an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding and/or lamination. The electrode assembly 52 is packaged in the accommodating cavity. The electrolyte solution infiltrates the electrode assembly 52. The secondary battery 5 may include one or more electrode assemblies 52 whose quantity is adjustable as required.

The preparation method of secondary battery of this application is well known. In some embodiments of this application, the positive electrode plate, the separator, the negative electrode plate, and the electrolyte may be assembled to form a secondary battery. For example, the positive electrode plate, the separator, and the negative electrode plate may be made into an electrode assembly through winding or lamination; and the electrode assembly is put in an outer package, followed by drying, and the electrolyte is injected, followed by processes such as vacuum packaging, standing, formation, and shaping, to obtain a secondary battery.

In some embodiments of this application, such secondary batteries of this application may be assembled into a battery module. The battery module may include a plurality of secondary batteries whose quantity may be adjusted based on application and capacity of the battery module.

FIG. 3 is a schematic diagram of a battery module as an example. As shown in FIG. 3, in the battery module 4, a plurality of secondary batteries 5 may be sequentially arranged along a length direction of the battery module 4. Certainly, the secondary batteries may alternatively be arranged in any other manners. Further, the plurality of secondary batteries 5 may be fastened by using fasteners.

Optionally, the battery module 4 may further include a shell with an accommodating space, and the plurality of secondary batteries 5 are accommodated in the accommodating space.

In some embodiments of this application, the battery module may be further assembled into a battery pack, and a quantity of battery modules included in the battery pack may be adjusted based on application and capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

**Electric apparatus**

A fourth aspect of this application provides an electric apparatus. The electric apparatus includes at least one of the secondary battery according to the third aspect of this application, a battery module, and a secondary battery pack. The secondary battery, battery module, or battery pack may be used as a power source for the electric apparatus or an energy storage unit of the electric apparatus. The electric apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the electric apparatus based on requirements for using the electric apparatus.

FIG. 6 is a schematic diagram of an electric apparatus as an example. This electric apparatus is a battery electric vehicle, a hybrid electric vehicle, a plug-in hybrid electric vehicle, or the like. To satisfy a requirement of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as its power source.

Content disclosed in this application is described in more detail in the following examples. These examples are merely intended for illustrative purposes because various modifications and changes made without departing from the scope of the content disclosed in this application are apparent to a person skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

Example 1-1

Preparation of silicone particles

Preparation of prepolymer: adding 1500 g of deionized water and 7.5 g of sodium dodecyl sulfate into a 5L three-necked bottle, stirring them at 1800 r/min for 40 minutes to emulsify to obtain a uniform and stable emulsion, and then adding 688.72 g of methyl acrylate, 26.53 g of acrylonitrile, and 995.25 g of methacryloxypropyl cage polysilsesquioxane in turn (with a ratio of molar amounts of methyl acrylate, acrylonitrile, and methacryloxypropyl cage polysilsesquioxane being 16:1:3), and keeping stirring at 1800 r/min for 40 minutes to obtain a uniform prepolymer.

Preparation of polymer: adding 4.5 g of sodium dodecyl sulfate and 1500 g of deionized water into a dried three-necked bottle, and stirring at a high speed for 40 minutes to emulsify to obtain a uniform and stable emulsion; then using a peristaltic pump to separately and slowly add the prepolymer prepared in the previous step and an initiator solution (a solution formed by dissolving 4.5 g of potassium persulfate in 45 g of deionized water) in a dropwise way; and after the dropwise addition is complete, raising the temperature to 90°C and keeping at that temperature for 1 h in reaction, then cooling down to 40°C, and adjusting the pH to 7-8 with ammonia water, followed by filtering, discharging, and a drying process to produce silicone particles with a number average molecular weight of 52763 and record them as F1.

The silicone particles F1 have an average particle size of 0.8 μm, a havesture content of 800 μg/g, and a specific surface area of 8 $g/m^2$.

Preparation of separator

Provision of a PE substrate with a thickness of 6.0 μm and a porosity of35%.

Preparation of coating slurry: mixing the silicone particles F1 prepared and ZIF-8 particles based on a proportion (a weight ratio of 5:1) in water to form a coating slurry, where the ZIF-8 particles have an average pore size of 1 nm and a porosity of 30%.

Application of coating: applying the coating slurry prepared on two sides of the PE substrate using a coater, followed by processes such as drying and slitting, to obtain a separator.

Preparation of positive electrode plate

Active substance $LiNi_{0.8}Mn_{0.1}Co_{0.1}O_2$ (NCM811), conductive agent acetylene black, and binder polyvinylidene fluoride at a weight ratio of 94:3:3 were mixed well in a proper amount of solvent N-methylpyrrolidone (NMP), to obtain a positive electrode slurry. The positive electrode slurry was applied on a positive electrode current collector aluminum foil, followed by processes such as drying, cold pressing, slitting, and cutting, to obtain a positive electrode plate.

Preparation of negative electrode plate

Negative electrode active material artificial graphite, conductive agent carbon black (Super P), binder styrene-butadiene rubber (SBR), and sodium carboxymethyl cellulose (CMC-Na) at a mass ratio of 95:2:2:1 were mixed well in a proper amount of solvent deionized water to obtain a negative electrode slurry. The negative electrode slurry was applied on a negative electrode current collector copper foil, followed by processes such as drying, cold pressing, slitting, and cutting, to obtain a negative electrode plate.

Preparation of electrolyte

Ethylene carbonate (EC) and ethyl methyl carbonate (EMC) at a mass ratio of 30:70 were mixed to obtain an organic solvent. Fully dried $LiPF_6$ was dissolved in the organic solvent to prepare an electrolyte with a concentration of 1 mol/L.

Preparation of secondary battery

The positive electrode plate, the separator, and the negative electrode plate were stacked in order and wound to obtain an electrode assembly. The electrode assembly was put into an outer package; and after drying, the electrolyte was injected thereto, followed by processes such as vacuum packaging, standing, formation, and shaping, to obtain a secondary battery.

Examples 1-2 to 1-11

Preparation was carried out using a method similar to that in Example 1-1, except for the relevant parameters of the coating of the separator. Detailed parameters are given in Table 1.

Comparative example 1-1

Preparation was carried out using a method similar to that in Example 1-1 except that the coating-related parameters of the separator are not within the scope of protection of Claim 1, that is, the primary particles are silicone particles F1, and the secondary particles are non-porous aluminum oxide. Detailed parameters are given in Table 1.

Examples 2-1 to 2-4

Preparation was carried out using a method similar to that in Example 1-1 except for the percentages of the primary particles and the secondary particles contained in the coating of the separator. Detailed parameters are given in Table 2.

Comparative example 2-1

Preparation was carried out using a method similar to that in Example 2-1 except for the percentages of the primary particles and the secondary particles contained in the coating of the separator. Detailed parameters are given in Table 2.

Tests

(1) Test for thermal shrinkage rate of separator

The thermal shrinkage rate of the separator can be measured according to the standard GB/T 36363-2018. Specific tests are as follows: Sample preparation: cutting the separator prepared along TD and MD directions using a punching machine into samples with a width of 50 mm and a length of 100 mm; taking 5 parallel samples and placing them on A4 paper; and then placing the A4 paper with the samples on corrugated paper with a thickness of 1 mm to 5 mm.

Sample testing: setting the temperature to 150°C for a blast oven; after the temperature has reached the preset temperature and stabilized for 30 minutes, placing the A4 paper with the samples on the corrugated paper into the blast oven, and starting timing; and after the preset time (1 h in this application) is reached, measuring the lengths and widths of the separator samples, and marking the values with a and b, respectively.

Calculation of thermal shrinkage rate: machine-direction (MD) thermal shrinkage rate=[(100-a)/100]×100%, and transverse-direction (TD) thermal shrinkage rate=[(50-b)/50]×100%. The average value of 5 parallel samples was taken as the test result.

(2) Test for ionic conductivity of separator

The ionic conductivity of the separator can be measured through alternating current impedance spectroscopy experiments. Specifically, the separator was cut into circular pieces of a certain area, dried, placed between two stainless steel electrodes, and sealed to form a button battery after absorbing a sufficient amount of electrolyte. Then the battery was subjected to alternating current impedance spectroscopy experiments. The intersection of the linear portion of the obtained impedance spectrum with the real axis represents the bulk resistance of the electrolyte. Therefore, the ionic conductivity of the separator can be calculated according to the formula $\sigma=(L/A)\times R$. L represents the thickness of the separator (cm), A represents the contact area between the stainless steel electrodes and the separator ($cm^2$), and R represents the bulk resistance of the electrolyte (mS).

The electrolyte used can be prepared according to the following method: mixing ethylene carbonate (EC), ethyl methyl carbonate (EMC), and diethyl carbonate (DEC) at a mass ratio of 30:50:20 to obtain an organic solvent, and dissolving fully dried $LiPF_6$ in the organic solvent to prepare an electrolyte with a concentration of 1 mol/L.

(3) Test for capacity retention rate of battery

At 25°C, the battery was constant-current charged at 1/3C to 4.3 V, then constant-voltage charged at 4.3 V to a current of 0.05C, left standing for 5 minutes, and then discharged at 1/3C to 2.8 V. The resulting capacity was recorded as the initial capacity $C_0$. The preceding steps were repeated and the discharged capacity $C_{1000}$ of the battery after the 1000-th cycle was recorded. The battery capacity retention rate $P_{1000}$ after 1000 cycles is $C_{1000}/C_0$* 100%.

Table 1 lists the test results of the coating in Examples 1-1 to 1-5 and Comparative example 1-1 under different parameters.

**Table 1**

| No. | Coating | | | | Thermal shrinkage rate of separator at 150°C for 1 h | | Ionic conductivity (S/m) | Capacity retention rate after 1000 cycles at 25°C (%) |
|---|---|---|---|---|---|---|---|---|
| | Material of primary particles | Secondary particles | | | MD (%) | TD (%) | | |
| | | Material | Average pore size | Porosity | | | | |
| Example 1-1 | Silicone particles F1 | ZIF-8 | 1 nm | 30% | 0.5 | 0.7 | 1.08 | 94.7 |
| Example 1-2 | Silicone particles F1 | ZIF-8 | 0.8 nm | 30% | 0.6 | 0.8 | 1.12 | 95.3 |
| Example 1-3 | Silicone particles F1 | ZIF-8 | 0.35 nm | 30% | 0.8 | 0.85 | 1.13 | 95.6 |
| Example 1-4 | Silicone particles F1 | ZIF-8 | 0.54 nm | 30% | 0.7 | 0.75 | 1.09 | 94.9 |
| Example 1-5 | Silicone particles F1 | ZIF-8 | 1 nm | 40% | 0.6 | 0.9 | 1.23 | 95.8 |
| Example 1-6 | Silicone particles F1 | ZIF-8 | 1 nm | 50% | 0.8 | 0.9 | 1.31 | 96.3 |
| Example 1-7 | Silicone particles F1 | ZIF-8 | 1 nm | 60% | 0.85 | 0.95 | 1.33 | 97.1 |
| Example 1-8 | Polyimide particles | ZIF-8 | 1 nm | 30% | 0.7 | 0.8 | 1.02 | 93.6 |
| Example 1-9 | Phenolic resin particles | ZIF-8 | 1 nm | 30% | 0.6 | 0.65 | 1.05 | 94.1 |
| Example 1-10 | Silicone particles F1 | IRMOF-7 | 1 nm | 30% | 0.5 | 0.6 | 1.10 | 94.3 |
| Example 1-11 | Silicone particles F1 | Porous aluminum oxide | 1 nm | 30% | 1.85 | 2 | 0.93 | 90.4 |
| Comparative example 1-1 | Silicone particles F1 | Non-porous aluminum oxide | / | / | 2.5 | 2.7 | 0.71 | 86.5 |

It can be learned from Table 1 that in the separator according to this application, the primary particles in the coating are organic particles. The organic particles have good heat resistance, and when the separator shrinks due to heat, the primary particles, the secondary particles, and/or the primary particles and the secondary particles in the coating may come into contact with each other as the substrate shrinks, providing a force opposite to a direction of shrinkage to the substrate. This reduces the shrinkage level of the separator and reduces the risk of short circuit between the positive electrode and negative electrode in the battery, thereby improving the thermal safety performance of the battery. In addition, the secondary particles with a pore structure can store electrolyte and improve the electrolyte absorption rate and

electrolyte retention rate of the separator, and their pores can function as ion channels to transport ions, thereby enabling the battery to have both good heat resistance and good cycling performance.

Table 1 lists the test results of Examples 1-1, 2-1 to 2-4 and Comparative example 2-1 when the coating contains different weights of silicone particles F1 and ZIF-8.

**Table 2**

| No. | Coating | | | Thermal shrinkage rate of separator at 150°C for 1 h | | Ionic conductivity (S/m) | Capacity retention rate after 1000 cycles at 25°C (%) |
|---|---|---|---|---|---|---|---|
| | Weight proportion A of silicone particles F1 (%) | Weight proportion B of ZIF-8 (%) | A/B | MD (%) | TD (%) | | |
| Example 1-1 | 77.5 | 15.5 | 5 | 1.9 | 2 | 1.14 | 94.8 |
| Example 2-1 | 82.4 | 10.3 | 8 | 0.5 | 0.3 | 1.13 | 96.5 |
| Example 2-2 | 82.5 | 7.5 | 11 | 0.6 | 0.2 | 1.08 | 94.1 |
| Example 2-3 | 85.5 | 5.7 | 15 | 1.2 | 1 | 0.85 | 91.9 |
| Example 2-4 | 86 | 4.3 | 20 | 3 | 2.4 | 0.80 | 90.2 |
| Comparative example 2-1 | 90 | 0 | / | 4 | 5.3 | 0.71 | 88.4 |

It can be learned from Table 2 that the weight of the primary particles is larger compared to the weight of the secondary particles. This can not only help to reduce the shrinkage level of the separator to improve the thermal safety performance of the battery, but also enable the organic particles to better overlap each other, so that more ion transport channels are formed between the particles, improving the ionic conductivity of the separator and thus improving the cycling performance of the battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by those skilled in the art, and other manners constructed by combining some of the constituent elements in the embodiments are also included in the scope of this application.

## Claims

**1.** A separator, comprising:

a substrate; and
a coating provided on at least one side of the substrate, wherein the coating comprises primary particles and secondary particles, the primary particles being organic particles and the secondary particles having a pore structure.

**2.** The separator according to claim 1, wherein an average pore size of the secondary particles is 0.1 nm to 10 nm, optionally 0.4 nm to 5 nm.

**3.** The separator according to claim 1 or 2, wherein a porosity of the secondary particles is 10% to 60%, optionally 30% to 50%.

**4.** The separator according to any one of claims 1 to 3, wherein an average particle size of the secondary particles is less than or equal to 2 μm, optionally 0.1 μm to 1 μm.

**5.** The separator according to any one of claims 1 to 4, wherein a specific surface area of the secondary particles is greater than or equal to 100 $m^2/g$, optionally 500 $m^2/g$ to 2000 $m^2/g$.

**6.** The separator according to any one of claims 1 to 5, wherein based on a weight of the coating, a ratio of a weight proportion A of the primary particles and a weight proportion B of the secondary particles satisfies: $1<A/B\leq 20$, optionally $5\leq A/B\leq 15$.

**7.** The separator according to any one of claims 1 to 6, wherein the weight proportion B of the secondary particles in the coating is less than or equal to 20%, optionally 0.1% to 15%.

**8.** The separator according to any one of claims 1 to 7, wherein the secondary particles comprise one or more of inorganic particles and metal-organic framework materials;

optionally, the inorganic particles comprise one or more of titanium oxides, zirconium oxides, barium oxides, magnesium oxides, barium sulfates, magnesium aluminum silicates, zirconium titanates, and barium titanates; and
optionally, the metal-organic framework materials comprise one or more of IRMOFs, ZIFs, MILs, PCNs, CPLs, and UiOs.

**9.** The separator according to any one of claims 1 to 8, wherein the secondary particles have a through-hole structure.

**10.** The separator according to any one of claims 1 to 9, wherein the primary particles comprise one or more of silicone particles, melamine formaldehyde resin particles, phenolic resin particles, polyester particles, polyimide particles, polyamideimide particles, polyaramide particles, polyphenylene sulfide particles, polysulfone particles, polyethersulfone particles, polyether ether ketone particles, and polyaryl ether ketone particles; and optionally, the primary particles comprise silicone particles.

**11.** The separator according to any one of claims 1 to 10, wherein the primary particles comprise silicone particles, and the silicone particle comprises a first polymer, the first polymer comprising a first structural unit, a second structural unit, and a third structural unit; wherein
the first structural unit has a structure represented by formula (I):

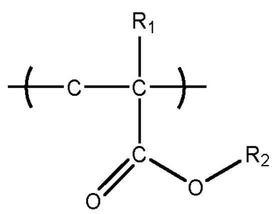
formula (I);

wherein

in the formula (I), $R_1$ comprises one or more of a hydrogen atom or a substituted or unsubstituted C1-C5 alkyl; and optionally, $R_1$ comprises one or more of a hydrogen atom or a substituted or unsubstituted C1-C3 alkyl; and $R_2$ comprises one or more of a substituted or unsubstituted C1-C20 alkyl, a substituted or unsubstituted C3-C20 cycloalkyl, and a substituted or unsubstituted C1-C20 hydroxyalkyl; and optionally, $R_2$ comprises one or more of a C1-C12 alkyl, a C3-C12 cycloalkyl, and a C1-C12 hydroxyalkyl;
the second structural unit is represented by formula (II):

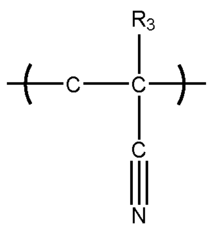
formula (II);

wherein

in the formula (II), $R_3$ comprises one or more of a hydrogen atom or a substituted or unsubstituted C1-C5 alkyl;

and optionally, $R_3$ comprises one or more of a hydrogen atom or a substituted or unsubstituted C1-C3 alkyl; and

the third structural unit is represented by formula (III):

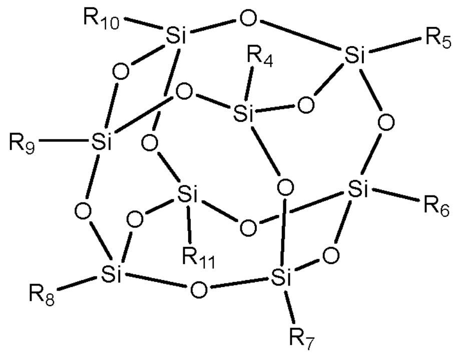

formula (III);

wherein

in the formula (III), $R_4$ to $R_{11}$ each independently comprise one or more of a substituted or unsubstituted C1-C10 alkyl or a structural unit represented by formula (III-1), wherein at least one of $R_4$ to $R_{11}$ is the structural unit represented by formula (III-1),

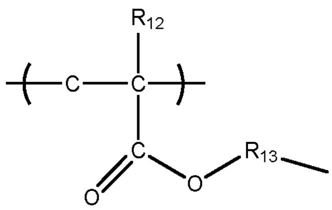

formula (III-1);

wherein

in the formula (III-1), $R_{12}$ comprises one or more of a hydrogen atom or a substituted or unsubstituted C1-C5 alkyl; and optionally, $R_{12}$ comprises one or more of a hydrogen atom or a substituted or unsubstituted C1-C3 alkyl; and

$R_{13}$ comprises a substituted or unsubstituted C1-C10 alkyl; and optionally, $R_{13}$ comprises a substituted or unsubstituted C3-C10 alkyl.

12. The separator according to claim 11, wherein based on a total molar amount of the first structural unit, the second structural unit, and the third structural unit, a molar amount of the first structural unit is denoted as a%, wherein $70 \le a \le 90$, optionally $75 \le a \le 85$; and/or

based on the total molar amount of the first structural unit, the second structural unit, and the third structural unit, a molar amount of the second structural unit is denoted as b%, wherein $0 < b \le 16$, optionally $5 < b \le 15$; and/or

based on the total molar amount of the first structural unit, the second structural unit, and the third structural unit, a molar amount of the third structural unit is denoted as c%, wherein $2 \le c \le 15$, optionally $5 \le c \le 10$.

13. The separator according to claim 11 or 12, wherein based on a total molar amount of the first structural unit, the second structural unit, and the third structural unit, a molar amount of the first structural unit is denoted as a%, a molar amount of the second structural unit is denoted as b%, and a molar amount of the third structural unit is denoted as c%; and the silicone particles satisfy one or more of condition (1) to condition (3):

(1) $4 \le a/b \le 15$;

(2) $5 \le a/c \le 14$;

and

(3) a:b:c is (13–16):(1–3):(3–4).

**14.** The separator according to any one of claims 1 to 13, wherein the primary particles comprise silicone particles, and the silicone particle comprises a second polymer, the second polymer comprising a structural unit represented by formula (a):

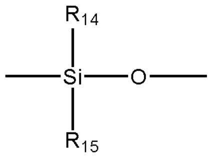 formula (a);

wherein

in the formula (a), $R_{14}$ and $R_{15}$ each independently comprise one or more of a substituted or unsubstituted C1-C10 alkyl, hydroxyl, or amino; and optionally, $R_{14}$ and $R_{15}$ each independently comprise one or more of a substituted or unsubstituted C1-C6 alkyl, hydroxyl, or amino; and

optionally, the second polymer comprises one or more of polymethylsiloxane, polydimethylsiloxane, polydiethylsiloxane, polymethylhydroxysiloxane, and polymethylaminosiloxane.

**15.** The separator according to any one of claims 10 to 14, wherein a number average molecular weight of the silicone particles is 35,000 to 70,000, optionally 40,000 to 55,000.

**16.** The separator according to any one of claims 10 to 15, wherein based on a mass of the silicone particles, a moisture content of the silicone particles is less than or equal to 2500 μg/g, optionally 700 μg/g to 2000 μg/g.

**17.** The separator according to any one of claims 10 to 16, wherein an average particle size of the silicone particles is less than or equal to 3 μm, optionally 0.01 μm to 2 μm.

**18.** The separator according to any one of claims 10 to 17, wherein a specific surface area of the silicone particles is less than or equal to 12.0 $m^2$/g, optionally 5.0 $m^2$/g to 10.0 $m^2$/g.

**19.** The separator according to any one of claims 1 to 18, wherein a thickness of the substrate is less than or equal to 16 μm, optionally 3 μm to 12 μm.

**20.** The separator according to any one of claims 1 to 19, wherein a porosity of the substrate is greater than or equal to 25%, optionally 30% to 45%.

**21.** The separator according to any one of claims 1 to 20, wherein the separator satisfies at least one of the following characteristics:

(1) a machine-direction thermal shrinkage rate of the separator at 150°C for 1 h is less than or equal to 2%;
(2) a transverse-direction thermal shrinkage rate of the separator at 150°C for 1 h is less than or equal to 2%;
(3) an air permeability of the separator is less than or equal to 230 s/100cc, optionally 160 s/100cc to 200 s/100cc;
(4) a machine-direction tensile strength of the separator is greater than or equal to 2700 kg/$cm^2$, optionally 3000 kg/$cm^2$ to 4500 kg/$cm^2$;
(5) a transverse-direction tensile strength of the separator is greater than or equal to 2000 kg/$cm^2$, optionally 2500 kg/$cm^2$ to 4500 kg/$cm^2$;
(6) a wetted length of the separator is greater than or equal to 65 mm, optionally 70 mm to 100 mm; and
(7) an ionic conductivity of the separator is 0.8 S/m to 1.5 S/m.

**22.** A preparation method of the separator according to any one of claims 1 to 21, comprising:

providing a substrate; and

mixing organic particles as primary particles and secondary particles with a pore structure in a solvent to prepare a coating slurry; and
applying the coating slurry to at least one side of the substrate to form a slurry film layer and forming a coating by drying the slurry film layer, to obtain a separator.

**23.** A secondary battery, comprising the separator according to any one of claims 1 to 21 or a separator prepared by using the preparation method according to claim 22.

**24.** An electric apparatus, comprising the secondary battery according to claim 23.

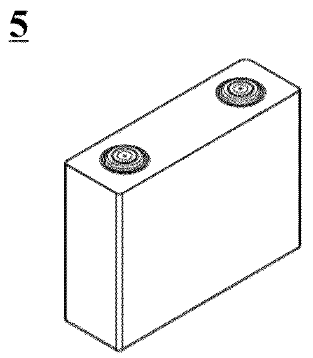


FIG. 1

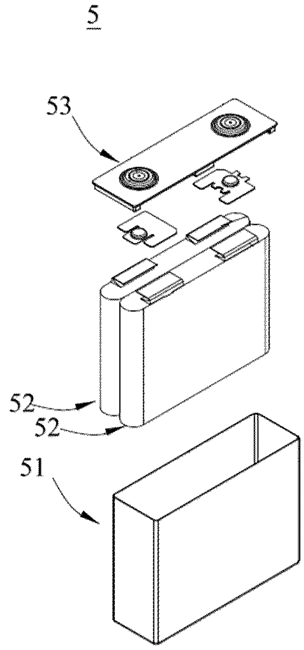


FIG. 2

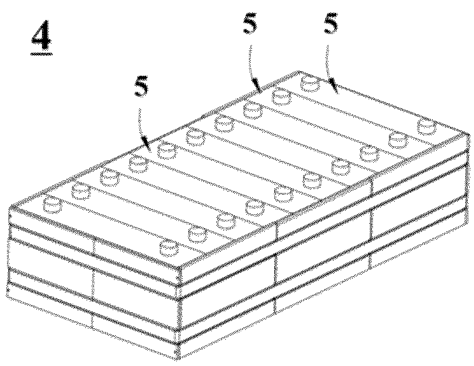


FIG. 3

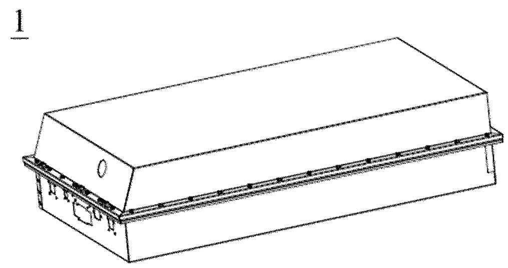


FIG. 4

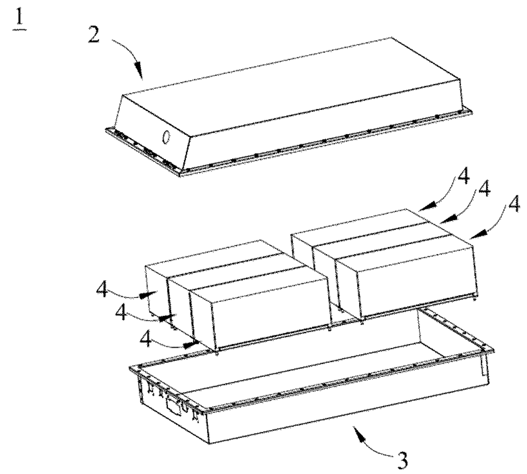


FIG. 5

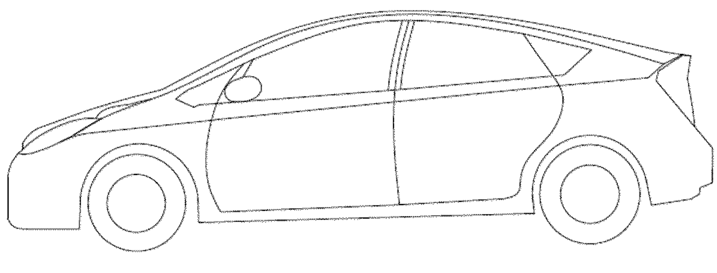

FIG. 6

**INTERNATIONAL SEARCH REPORT**

International application No.
**PCT/CN2022/136435**

**A. CLASSIFICATION OF SUBJECT MATTER**

H01M50/446(2021.01)i; H01M50/409(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, WPABS, DWPI, VEN, USTXT, CNKI; 隔膜, 隔离膜, 有机, 高分子, 聚合物, 硅氧烷, 有机硅, 颗粒, 无机, 有孔, 多孔, 涂层, 金属, 有机框架, separator, organic, polymer, organosilicon, siloxane, particle, porous, metal, frame

**C. DOCUMENTS CONSIDERED TO BE RELEVANT**

| Category* | Citation of document, with indication, where appropriate, of the relevant passages | Relevant to claim No. |
|---|---|---|
| X | CN 104868086 A (GUANGDONG ZHUGUANG NEW ENERGY TECHNOLOGY CO., LTD.) 26 August 2015 (2015-08-26)<br>description, paragraphs 5-32 and 67 | 1-10, 19-24 |
| X | CN 108336279 A (WUHAN ZIMT NEW MATERIAL TECHNOLOGY CO., LTD.) 27 July 2018 (2018-07-27)<br>description, paragraphs 6-31 | 1-10, 19-24 |
| Y | CN 104868086 A (GUANGDONG ZHUGUANG NEW ENERGY TECHNOLOGY CO., LTD.) 26 August 2015 (2015-08-26)<br>description, paragraphs 5-32 and 67 | 14-18 |
| Y | CN 104900832 A (GUANGDONG ZHUGUANG NEW ENERGY TECHNOLOGY CO., LTD.) 09 September 2015 (2015-09-09)<br>description, paragraphs 9-26 | 14-18 |
| A | CN 109950451 A (NINGDE CONTEMPORARY AMPEREX TECHNOLOGY CO., LTD.) 28 June 2019 (2019-06-28)<br>entire document | 1-24 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 June 2023** | **16 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2022/136435**

**C. DOCUMENTS CONSIDERED TO BE RELEVANT**

| Category* | Citation of document, with indication, where appropriate, of the relevant passages | Relevant to claim No. |
|---|---|---|
| A | US 2012135289 A1 (NODA, I.) 31 May 2012 (2012-05-31) entire document | 1-24 |

Form PCT/ISA/210 (second sheet) (July 2022)

**INTERNATIONAL SEARCH REPORT**
**Information on patent family members**

International application No.
**PCT/CN2022/136435**

| Patent document cited in search report | Publication date (day/month/year) | Patent family member(s) | Publication date (day/month/year) |
|---|---|---|---|
| CN 104868086 A | 26 August 2015 | CN 104868086 B | 25 May 2018 |
| CN 108336279 A | 27 July 2018 | None | |
| CN 104900832 A | 09 September 2015 | CN 104900832 B | 03 July 2018 |
| CN 109950451 A | 28 June 2019 | EP 3503255 A1 | 26 June 2019 |
| | | EP 3503255 B1 | 05 April 2023 |
| | | US 2019198840 A1 | 27 June 2019 |
| | | US 10868289 B2 | 15 December 2020 |
| US 2012135289 A1 | 31 May 2012 | US 8802272 B2 | 12 August 2014 |

Form PCT/ISA/210 (patent family annex) (July 2022)